(19) Europäisches Patentamt / European Patent Office / Office européen des brevets

(11) **EP 3 866 230 B1**

(12) **EUROPEAN PATENT SPECIFICATION**

(45) Date of publication and mention
of the grant of the patent:
**22.03.2023 Bulletin 2023/12**

(21) Application number: **21167374.4**

(22) Date of filing: **02.02.2009**

(51) International Patent Classification (IPC):
**C04B 35/52** (2006.01)   **C04B 35/532** (2006.01)
**H01M 4/04** (2006.01)   **H01M 4/133** (2010.01)
**H01M 4/1393** (2010.01)   **H01M 4/587** (2010.01)
**H01M 10/0525** (2010.01)   **H01M 10/0568** (2010.01)
**H01M 10/0569** (2010.01)   **H01M 4/02** (2006.01)

(52) Cooperative Patent Classification (CPC):
**H01M 4/587; C04B 35/522; C04B 35/532;**
**H01M 4/043; H01M 4/133; H01M 4/1393;**
C04B 2235/425; C04B 2235/528; C04B 2235/5296;
C04B 2235/5409; C04B 2235/5436; H01M 10/0525;
H01M 10/0568; H01M 10/0569; H01M 2004/021;

(Cont.)

(54) **MULTI-LAYER STRUCTURED CARBONACEOUS MATERIAL, PROCESS FOR PRODUCING THE SAME, AND NONAQUEOUS SECONDARY BATTERY ADOPTING THE SAME**

MEHRSCHICHTIGES STRUKTURIERTES KOHLENSTOFFHALTIGES MATERIAL, VERFAHREN ZU DESSEN HERSTELLUNG UND NICHTWÄSSRIGE SEKUNDÄRBATTERIE, DIE DIESES MATERIAL VERWENDET

MATIÈRE CARBONÉE STRUCTURÉE MULTICOUCHE, SON PROCÉDÉ DE FABRICATION ET BATTERIE SECONDAIRE NON AQUEUSE L'UTILISANT

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **04.02.2008 JP 2008023527**

(43) Date of publication of application:
**18.08.2021 Bulletin 2021/33**

(62) Document number(s) of the earlier application(s) in accordance with Art. 76 EPC:
**09708756.3 / 2 242 133**

(73) Proprietor: **Mitsubishi Chemical Corporation**
**Chiyoda-ku**
**Tokyo 100-8251 (JP)**

(72) Inventors:
• **Kamada, Tomiyuki**
  **Tokyo, 108-0014 (JP)**
• **Okanishi, Kengo**
  **Kanagawa, 762-8510 (JP)**
• **Yamaguchi, Keita**
  **Kanagawa, 762-8510 (JP)**
• **Satou, Hideharu**
  **Ibaraki, 300-0332 (JP)**
• **Uono, Hiroyuki**
  **Ibaraki, 300-0332 (JP)**

(74) Representative: **Hoffmann Eitle**
**Patent- und Rechtsanwälte PartmbB**
**Arabellastraße 30**
**81925 München (DE)**

(56) References cited:
**EP-A1- 0 955 684    EP-A1- 1 775 785**
**WO-A1-2007/099877    JP-A- H10 226 505**
**JP-A- 2002 348 109**

EP 3 866 230 B1

(52) Cooperative Patent Classification (CPC): (Cont.)
Y02E 60/10

**Description**

TECHNICAL FIELD

The present invention relates to a multi-layer structured carbonaceous material and a process for producing the same, and particularly to a nonaqueous secondary battery-oriented negative electrode adopting the same as a negative electrode material, as well as to a nonaqueous secondary battery. More particularly, the present invention relates to an electrode material, preferably a carbon material for a negative electrode, capable of forming a nonaqueous secondary battery, which has a higher capacity, is low in irreversible capacity upon initial charge and discharge, and has excellent cycle characteristics.

BACKGROUND ART

With recently progressed downsizing of electronic equipments, it has been desired to increase capacities of secondary batteries. Thus, attention has been directed to a lithium ion secondary battery which is higher in energy density than a nickel-cadmium battery, nickel-hydrogen battery, and the like.

Although it has been initially tried to adopt lithium metal as a negative electrode material of a lithium ion secondary battery, this has revealed a possibility that lithium is deposited in a dendrite shape during repeated charges and discharges in a manner to penetrate a separator and even reach a positive electrode to cause a short circuit, thereby problematically causing a firing trouble. As such, it is presently noticed to adopt a carbon material as a negative electrode material, which allows for intercalation and deintercalation of a nonaqueous solvent into and from between layers of the carbon material in a charging and discharging process, thereby preventing deposition of lithium metal.

Firstly placed on the market, as a nonaqueous secondary battery adopting a carbon material, was batteries each adopting a non-graphitizing carbon material having a lower crystallinity as a negative electrode material. Next, those batteries have been placed on the market up to now, which adopt graphites having higher crystallinity.

Graphite has a theoretically maximum electric capacity of 372 mAh/g, and is capable of providing a battery having a higher charge-discharge capacity by appropriately conducting selection of an electrolytic solution.

Further, as described in Patent Documents 1 and 2, it has been investigated to adopt carbonaceous materials each having a multi-layer structure. These investigations are based on such a concept to take advantage of merits (higher capacity, and lower irreversible capacity) of graphite having a higher crystallinity and merits (smooth intercalation and deintercalation of lithium by virtue of wider distances between graphene layers in a carbonaceous material; a higher output; and insusceptibility to reaction with electrolytic solution) of carbonaceous material having a lower crystallinity, thereby complementing a demerit (being apt to decompose a propylene carbonate based electrolytic solution) of the graphite having the higher crystallinity and a demerit (larger irreversible capacity) of the carbonaceous material having the lower crystallinity.

Additionally, Patent Document 3, relates to a negative electrode active material for a non-aqueous electrolyte secondary battery. Said active material is a carbonaceous material comprising graphitic carbon particles and a carbon substance of an organic compound. Patent Document 3 aims at improving charge/discharge cycle characteristics of the secondary battery. The carbonaceous material is produced by mixing the graphitic carbon particles with the organic compound and heat treating the mixture at a temperature of 400 to 3400 °C. Specifically, the carbonaceous material is produced by mixing spherical natural graphite particles having a mean particle size of 19 $\mu$m and a particle circularity of 0.92 with an organic compound and heating the mixture at 3000° C for 168 hours or more. The mixing ratio of the graphite particles to the organic compound is between 95/5 to 99/1 after the heat treatment.

Although the above-mentioned problem can be solved to a certain extent by adopting such carbonaceous materials each having a multi-layer structure, it has been desired to achieve a further development so as to obtain a nonaqueous secondary battery which has a higher capacity, is sufficiently low in irreversible capacity upon initial charge and discharge, and has excellent cycle characteristics.

Patent Document 1: JP04-171677A

Patent Document 2: JP04-370662A

Patent Document 3: WO 2007/099877 A1

DISCLOSURE OF INVENTION

PROBLEM TO BE SOLVED BY THE INVENTION

The present invention has been achieved in view of the above background art, and it is an object of the present invention to provide: a negative electrode material for a nonaqueous secondary battery, which has a higher capacity, is low in irreversible capacity upon initial charge and discharge, and has excellent cycle characteristics; and a nonaqueous secondary battery adopting the negative electrode material.

MEANS FOR SOLVING PROBLEM

The present inventors have earnestly and repetitively conducted investigations of electrode materials having various physical properties, and found out that, according to the conventional techniques, the above-mentioned multi-layer structured carbonaceous material is mixed with a thickener and a binder as well as a disperse medium to prepare a slurry; the slurry is then coated onto a copper foil as a current collector, followed by drying, to prepare an electrode, and thereafter, the electrode is pressed to a predetermined electrode density and is subjected to a considerable load, to bring about breakage and peeling of a surficial carbonaceous material which is harder and brittler than graphite, so that the internal graphite is made to be directly contacted with an electrolytic solution. The present inventors have further found out that such contact makes it difficult to exhibit the above-described concept inherently possessed by the multi-layer structure, thereby considerably causing an increased irreversible capacity upon initial charge and discharge, deteriorated cycle characteristics, and the like.

Then, the present inventors have found out that the following effects can be exhibited even when an electrode is highly densified which effects have not been conventionally achieved, by adopting such a multi-layer structured carbonaceous material which has been obtained by mixing graphitic carbon particles with an organic compound and by thermally treating the mixture, wherein loop structures are present at an edge portion of each of the graphitic carbon particles, and wherein the graphitic carbon particles have carbonized products of the organic compound affixed to surfaces of the particles, respectively, while maintaining the loop structures.

Namely, as compared to graphite itself or the conventional multi-layer structured carbonaceous material, the multi-layer structured carbonaceous material of the present invention is insusceptible to breakage and peeling of lowly crystalline carbon present at a surface of the multi-layer structured carbonaceous material upon preparation of an electrode, and is capable of restricting a press load to a lower value. As a result, the present inventors have found out that a nonaqueous secondary battery can be obtained, which has a higher capacity, is low in irreversible capacity upon initial charge and discharge, and has excellent cycle characteristics, in a manner to possess extremely excellent battery characteristics, thereby narrowly reaching the present invention.

The present invention provides a multi-layer structured carbonaceous material as defined in claims 1 to 6.

Further, the present invention provides a production method of the above-described multi-layer structured carbonaceous material, comprising the steps as defined in claims 7 to 11.

Furthermore, the present invention provides a nonaqueous secondary battery-oriented negative electrode adopting the above-described multi-layer structured carbonaceous material as a negative electrode material.

Moreover, the present invention provides a nonaqueous secondary battery comprising: a negative electrode containing a carbonaceous material capable of intercalating therein and deintercalating therefrom lithium; a positive electrode; and a solute and a nonaqueous solvent; wherein the negative electrode is the above-described nonaqueous secondary battery-oriented negative electrode.

EFFECT OF THE INVENTION

According to the present invention, breakage and peeling of a lowly crystalline carbon present at a surface of a multi-layer structured carbonaceous material are hardly caused upon preparation of an electrode, thereby enabling to restrict a press load to a lower value. This resultingly enables to provide a negative electrode material for a nonaqueous secondary battery having excellent battery characteristics, which battery is exemplarily allowed to maintain a higher discharge capacity comparable to that of graphite, to decrease an irreversible capacity upon initial charge and discharge, and to possess excellent cycle characteristics.

BRIEF DESCRIPTION OF DRAWINGS

FIG. 1 is a view of a transmission electron microscope (hereinafter abbreviated to "TEM") photograph (magnification of 3,200,000) of a multi-layer structured carbonaceous material according to Example 9;

FIG. 2 is a TEM photograph (magnification of 4,000,000) of a multi-layer structured carbonaceous material according to Example 2;

FIG. 3 is a TEM photograph (magnification of 4,000,000) of a multi-layer structured carbonaceous material according to Example 3;

FIG. 4 is a TEM photograph (magnification of 2,000,000) of a multi-layer structured carbonaceous material according to Example 7; and

FIG. 5 is a TEM photograph (magnification of 4,000,000) of a multi-layer structured carbonaceous material according to Comparative Example 2.

## BEST MODE(S) FOR CARRYING OUT THE INVENTION

Although the present invention will be explained hereinafter, the present invention is not limited to the following specific Examples and can be arbitrarily modified within the technical scope of the present invention.

The multi-layer structured carbonaceous material of the present invention (hereinafter called "carbonaceous material of the present invention", in some cases) is obtained by mixing graphitic carbon particles with an organic compound, and by thermally treating the mixture, and satisfies specific requirements. Namely, the present invention relates a multi-layer structured carbonaceous material comprising graphitic carbon particles having carbonized products of the organic compound affixed to surfaces of the particles, respectively.

The carbonaceous material of the present invention is characterized in that loop structures are present at an edge portion of each of the graphitic carbon particles, and that the graphitic carbon particles have carbonized products of the organic compound affixed to surfaces of the particles, respectively, while maintaining the loop structures. Here, the loop structures at edge portions of the graphitic carbon particles can be actually confirmed by a transmission electron microscope (TEM) photograph to be described later. According to observation by TEM, the carbonaceous material of the present invention is so configured that: a group of closed loop structures are present at a surface of each of graphitic carbon powder particles, where each closed loop structure is formed by closely and possibly nestedly interconnected at least two edge portions of graphite c-axis plane layers such that each closed loop structure is in a shape of folded portion of at least one layer, and where each graphite c-axis plane layer comprises a network structure mainly comprising six-membered carbon rings interconnected within a plane; and the graphitic carbon particles have carbonized products of the organic compound affixed to surfaces of the particles, respectively, while maintaining the loop structures. Contrary, when such loop structures are not present, or when most of loop structures, if present, are broken such that edge portions of particles are directly exposed, the effect of the present invention is never obtained even when the graphitic carbon particles have carbonized products of the organic compound affixed to surfaces of the particles, respectively.

The reason is not necessarily clear in the present invention, why the above effect is achieved by the carbonaceous material where the above noted loop structures are present at edge portions of graphitic carbon particles, and where the particles have carbonized products of the organic compound affixed to surfaces of the particles, respectively. Nonetheless, the reason can be considered as follows. Namely, the reason is considered to be such that: although the edge portions of graphitic carbon particles are end portions where an electrolytic solution is contacted with a negative electrode and thus a SEI film is apt to be formed there; the edge portions of the graphitic carbon particles, particularly edge portions of c-axis plane layers, are closely and possibly nestedly interconnected to form the closed loop structures and are thus inactivated, in a manner that the above-mentioned SEI film is formed at a decreased thickness, thereby lowering the irreversible capacity to the thus decreased extent.

(1) Starting materials for carbonaceous material of the present invention

(A) Graphitic carbon particles (nucleic material N)

The graphitic carbon particles in the present invention are used as a nucleic material for the carbonaceous material of the present invention. Such graphitic carbon particles will be simply abbreviated to a "nucleic material N" hereinafter.

<Physical properties of graphitic carbon particles (nucleic material N)>

The nucleic material N in the present invention has a volume average particle size within a range of 5 to 50 μm, preferably within a range of 7 to 35 μm, and more preferably within a range of 8 to 27 μm. It is noted that ranges expressed as "X to Y" in the present specification each imply a range including the values located before and after the term "to". Excessively larger volume average particle sizes deteriorate flatness and smoothness of surfaces of negative electrodes, while excessively smaller volume average particle sizes may disadvantageously lead to excessively increased specific surface areas of particles. The volume average particle size is measured by a method to be described later, and is defined to be measured in that way.

To obtain a negative electrode having a higher density, the nucleic material N as a starting material is to be preferably high in packageability, i.e., in tap density. The term "tap density" in this specification means a bulk density after tapping of 500 times, and is represented by the following equation:

$$[tap\ density] = [mass\ of\ packed\ powder] / [packed\ volume\ of\ powder]$$

The nucleic material N in the present invention has a tap density of 0.70 g/cm$^3$ or more, and particularly preferably 0.75 g/cm$^3$ or more. The upper limit thereof is preferably 1.40 g/cm$^3$ or less, and more preferably 1.20 g/cm$^3$ or less. While a packed structure of powder particles is affected by particle sizes, particle shapes, magnitudes of interactive forces between particles, and the like, the present specification is constituted to use a tap density as a criterion for quantitatively discussing the packed structure, such that nucleic materials N having tap densities of 0.70 g/cm$^3$ or more lead to higher packed ratios of electrodes and thus indicate that particle shapes thereof are spherical or elliptical substantially similar thereto. Nucleic materials N having smaller tap densities are considerably inferior in orientation of plate-like crystals of graphite when pressed to predetermined densities and formed into negative electrodes, thereby possibly disturbing charge and discharge under a higher load where migration of lithium ions at a higher speed is required.

The nucleic material N in the present invention has a BET specific surface area less than 18 m$^2$/g, preferably 15 m$^2$/g or less, and particularly preferably 13 m$^2$/g or less. BET specific surface areas larger than this range occasionally lead to incomplete coatings of lowly crystalline carbon.

The interlayer spacing (d002) of (002) plane to be obtained by an X-ray wide angle diffractometry is 0.345 nm or less, more preferably 0.340 nm or less, and particularly preferably less than 0.337 nm. Further, the crystallite size Lc in the c-axis direction is 90 nm or more. The interlayer spacing (d002) and crystallite size (Lc) are such values indicating a crystallinity of a carbon material bulk, in a manner that smaller values of interlayer spacing (d002) of (002) plane and larger crystallite sizes (Lc) imply carbon materials having higher crystallinity such that amounts of lithium to be intercalated into between graphite layers are increasedly brought closer to a theoretical value to thereby increase a capacity. Lower crystallinities of nucleic material N fail to express excellent battery characteristics (higher capacity, and lower irreversible capacity) to be otherwise provided upon adopting a highly crystalline graphite for an electrode. Particularly preferably, the interlayer spacing (d002) and crystallite size (Lc) are to be combined with each other, within the above ranges, respectively.

The nucleic material N in the present invention has an R value of 0.10 or more, more preferably 0.13 or more, and particularly preferably 0.15 or more, which R value is a ratio of a scattering intensity at 1,360 cm$^{-1}$ to a scattering intensity at 1,580 cm$^{-1}$ in an argon ion laser spectrum adopting argon ion laser beam at a wavelength of 514.5 nm. The upper limit of the R value is desirably 0.90 or less, preferably 0.70 or less, and particularly preferably 0.50 or less.

The R value is an index for indicating a crystallinity of a surficial portion of carbon particle (from a surface of particle, to a depth of about 100 angstroms), and larger R values represent lower crystallinities of surfaces and more disordered crystal structures. Since a spherodized nucleic material N generally has roughened surfaces of particles and exhibits an R value larger than that of graphite before spherodization, the spherodization also brings about an effect to enhance a bindability of the particles to a carbon material coated thereon when the nucleic material N is used in a multi-layer structured carbonaceous material to be described later. Excessively small R values deteriorate binding forces between highly crystalline graphitic carbon particles and lowly crystalline carbon material, thereby occasionally and easily causing peeling of the latter from the former. In turn, excessively larger R values tend to lower a crystallinity of bulks of particles, which is sometimes disadvantageous.

Further, the nucleic material N is to typically have a half-value width ($\Delta v$) of 17 cm$^{-1}$ or more for a peak at 1,580 cm$^{-1}$ in an argon laser Raman spectrum, preferably 19 cm$^{-1}$ or more, more preferably 21 cm$^{-1}$ or more, and particularly preferably 23 cm$^{-1}$ or more, and the upper limit thereof is typically 33 cm$^{-1}$ or less, preferably 31 cm$^{-1}$ or less, more preferably 29 cm$^{-1}$ or less, and particularly preferably 27 cm$^{-1}$ or less. Excessively narrower and wider half-value widths ($\Delta v$) are sometimes disadvantageous, by the same reasons of excessively smaller and larger R values.

Such a nucleic material N, which has an interlayer spacing (d002) of (002) plane of 0.345 nm or less obtained by a wide angle X-ray diffractometry, a crystallite size (Lc) of 90 nm or more, and an R value of 0.10 or more, is meant to be in a state that, although particles are high in crystallinity as a whole, surficial portions of the particles are roughened and have larger distortions such that edge portions are numerously present.

The nucleic material N in the present invention has a true density of 2.21 g/cm$^3$ or more, more preferably 2.22 g/cm$^3$ or more, and particularly preferably 2.24 g/cm$^3$ or more. The upper limit thereof is 2.26 g/cm$^3$, which is a theoretical density of graphite. The true density is related to a crystallinity of graphite, and true densities lower than the above range occasionally deteriorate the crystallinity to thereby bring about a lower charge-discharge capacity.

While the nucleic material N in the present invention is to meet the above conditions, such a nucleic material N has: (1a) a volume average particle size of 5 to 50 $\mu$m; (1b) a tap density of 0.70 g/cm$^3$ or more; (1c) a specific surface area less than 18 m$^2$/g, as measured by a BET method; (1d) an interlayer spacing (d002) of (002) plane of 0.345 nm or less, and a crystallite size (Lc) of 90 nm or more; (1e) an R value of 0.10 or more; and (1f) a true density of 2.21 g/cm$^3$ or more. Other physical properties are not particularly limited.

<Starting material for nucleic material N>

Starting materials for the nucleic material N in the present invention are not particularly limited, and it is possible to use graphitic carbon particles obtained by processing those carbon fibers into powders, which are derived from natural graphite, artificial graphite, pitch, polyacrylonitrile, mesophase pitch, or vapor phase grown one. As a starting material, it is most preferable to adopt natural graphite in flake or flaky shape which is most crystalline. These may be used solely in one kind, or mixedly in two or more kinds.

<Production method of nucleic material N>

The production method of the nucleic material N in the present invention is not particularly limited. For example, it is also possible to adopt classification means such as sifting, air classification, and the like for a commercially available natural graphite or an artificial graphite, thereby classifying and obtaining the nucleic material N having the above noted characteristics. Preferable production method is to apply a spherodization treatment (dynamic energy treatment) to naturally yielded graphitic carbon particles or artificially produced graphitic carbon particles by means of a special pulverizer such as disclosed in JP2000-340232A, to modify the particles into spherical shapes or elliptical shapes substantially similar thereto, thereby producing the nucleic material N. More preferably, it is desirable to remove coarse particles and fine particles from the graphitic carbon particles having been subjected to the spherodization treatment, by adopting classification means such as air classification or the like.

<Achievement of physical properties required for nucleic material N>

Conduction of the above-described spherodization treatment enables to obtain a nucleic material N comprising graphitic carbon particles after treatment, having an R value typically increased to 1.5 or more times, preferably 2 or more times, and up to an upper limit of typically 10 or less times, preferably 7 or less times, without restricted to such an upper limit, as compared to an R value before treatment, such that the nucleic material N has the R value of typically 0.10 or more, preferably 0.13 or more, and particularly preferably 0.15 or more, and a tap density of 0.70 g/cm$^3$ or more. Preferably, such a state is kept substantially unchanged before and after this treatment, that the interlayer spacing (d002) of (002) plane according to a wide angle X-ray diffractometry is 0.345 nm or less, and the crystallite size (Lc) is 90 nm or more.

(B) Thermally-treated product P of nucleic material N

Although it is possible in the present invention to directly mix the above-described graphitic carbon particles with an organic compound, it is preferable to once heat treat the graphitic carbon particles and thereafter mix them with an organic compound. Further, it is more preferable to heat treat the graphitic carbon particles after the spherodization treatment as noted above. It is particularly preferable to use graphitic carbon particles, which have been once spherodized and then heat-treated by a continuous furnace in an atmosphere of nitrogen or the like. Herein, the term "heat treatment" means to heat the graphitic carbon particles at a temperature between 500°C inclusive and 2,000°C inclusive, by using a heating furnace or the like. The heat-treated graphitic carbon particles are abbreviated to a "thermally-treated product P" in some cases hereinafter.

The thermally-treated product P is preferably configured to have 3 or more loop structures per 5 nm at its surface in a TEM image. It is noted that the nucleic material N is to embrace the thermally-treated product P in the present invention, unless otherwise specifically stated.

(C) Carbonized product S

Used as a precursor of a carbonized product (hereinafter abbreviated to "carbonized product S") of organic compound which product is to be attached to a surface of the carbonaceous material of the present invention to coat the nucleic material N, is an organic compound such as: an organic substance such as heavy oil or the like to be accompanied by a liquid phase carbonizing reaction; an organic compound such as a thermosetting resin or the like to be accompanied by a solid phase carbonizing reaction; or a mixture thereof. Preferably usable as the organic compound is that described in "Chemistry and industry of carbon material" written by Isao Mochida, published by Asakura Publishing Co., Ltd. This organic compound is not limited in terms of its type, insofar as the same is carbonized by firing.

<Liquid phase carbonization for carbonized product S>

Usable as an organic compound for progressing carbonization in liquid phase, are: coal tar pitches from soft pitch to hard pitch; straight heavy oils such as coal derived liquid; petroleum heavy oils such as asphaltene; petroleum heavy oils such as cracked heavy oils like naphtha tar to be by-produced upon thermal decomposition of petroleum, naphtha or the like; thermally treated pitches such as ethylene tar pitch, FCC decant oil, Ashland pitch, or the like, to be obtained by thermally treating cracked heavy oil; and the like.

Examples of the organic compound further include: vinyl-based polymers such as polyvinyl chloride, polyvinyl acetate, polyvinyl butyral, polyvinyl alcohol, and the like; substituted phenol resins such as 3-methylphenol-formaldehyde resin, 3,5-dimethylphenol-formaldehyde resin, and the like; aromatic hydrocarbons such as acenaphthylene, decacyclene, anthracene, and the like; nitrogen-ring compounds such as phenazine, acridine, and the like; sulfur-ring compounds such as thiophene, and the like; and the like.

Each of these organic compounds is usable by dissolvingly diluting it into an appropriately selected solvent, so as to affix it onto a surface of a nucleic material N. Upon selection of the organic compound, those having lower and lower viscosities are desirable, from a standpoint of necessity to affix the organic compound onto a surface of a nucleic material N while keeping its loop structures at the surface.

<Solid phase carbonization for carbonized product S>

Further, examples of an organic compound, for which the carbonization is to be progressed in a solid phase, include: natural polymers such as cellulose, and the like; chain vinyl resins such as polyvinylidene chloride, polyacrylonitrile, and the like; aromatic polymers such as polyphenylene and the like; thermosetting resins such as furfuryl alcohol resin, phenol-formaldehyde resin, imide resin, and the like; and the like. Further, each of these organic compounds is usable by dissolvingly diluting it into an appropriately selected solvent, so as to affix it onto a surface of a nucleic material N.

<Feature of carbonized product S>

As compared to a highly crystalline graphite where the nucleic material N has a flexibility and is apt to be deformed by application of load thereto, the carbonized product S has such a dynamic property that the carbonized product S is rather insufficient in crystallinity, thus hard, and insusceptible to deformation, so that the carbonized product S is brittle and apt to be broken by application of load thereto.

(2) Entire producing process of carbonaceous material of the present invention

The production method for obtaining the carbonaceous material in the present invention will be described hereinafter. The production method of the carbonaceous material of the present invention mainly comprises the following steps.

(A) Mixing step for mixing a nucleic material N with an organic compound or solution thereof, to obtain a mixture:
At the latter half of this step, it is preferable to remove part of volatile components, and to collect the mixture as an intermediate product where the organic compound has been subjected to a thermal treatment.
(B) Thermal treating step for heating the mixture to obtain a carbonized product:
It is desirable to heat the mixture, preferably in an atmosphere of inert gas, and preferably at a temperature between 600°C inclusive and 3,000°C inclusive.
(C) Powderizing step for powderizing the above obtained product:
It is noted that the following step is included as a pre-step of the step (A), in case of adopting a thermally-treated product P as a nucleic material N.
(A') Heat-treating step for heating the nucleic material N to obtain a thermally-treated product P:
The nucleic material N is to be heated, preferably in an atmosphere of inert gas, and preferably at a temperature between 600°C inclusive and 1,500°C inclusive.

The respective steps will be described hereinafter.
(A') Heat-treating step of nucleic material N:
In the heat-treating step, the nucleic material N is heated under flow of inert gas such as nitrogen gas, carbonic acid gas, argon gas, or the like. In this heat-treating step, edge faces of graphitic carbon particles are inactivated, i.e., loop-like structures are formed at surficial layers of the edge faces, respectively.

As heat treatment conditions for this heat-treating step, the highest temperature to be achieved is important. The lower limit of such a temperature is typically 500°C or higher, preferably 600°C or higher, more preferably 800°C or higher, and further preferably 850°C or higher. Temperatures lower than it fail to form loop structures at edge faces of the nucleic material N. In turn, the upper limit of such a temperature is 2,000°C or lower, particularly preferably 1,500°C or lower, where edge faces of the nucleic material N are typically inactivated sufficiently. Heat treatments at temperatures higher than it are extremely likely to alter structures of the edge faces of the nucleic material N, thereby possibly increasing a cost for the heat treatment.

(A) Mixing step:

In the mixing step, the nucleic material N is mixed with an organic compound or solution thereof. The mixing step may be conducted by an apparatus of batch type or continuous type, and may be conducted at a room temperature or in a reaction vessel by warming it. In case of conduction by warming the reaction vessel, it is made possible to lower the viscosity of the mixture to decrease a load against the apparatus, thereby enhancing a mixing efficiency. Further, keeping a reduced pressure within the vessel upon mixing, enables to enhance an effect to degasify the fine powder, and to improve dispersibility thereof.

<Example (1) of specific mixing method>

In case of batch type, the mixing apparatus may be constituted of a single mixer provided with a stirrer, or of multiple mixers in a manner to successively increase a dispersity. Exemplarily usable as a batch type mixing apparatus are: a mixer having such a structure that two frame-type blades are rotated while achieving a planetary motion within a fixed tank; an apparatus in a configuration that stirring and dispersing are conducted by a single blade within a tank, such as a dissolver as high-speed and high-shearing mixer, or a butterfly mixer for higher viscosity; a so-called kneader type apparatus, having a structure that a stirring blade of a sigma type or the like is rotated along a side surface of a semicylindrical mixing vessel; an apparatus of trimix type having totally three axes of stirring blades; an apparatus of a so-called bead mill type having a rotary disk and a dispersion medium within a dispersion vessel; or the like. Which of the apparatuses is to be used, is determined by taking account of a viscosity of the mixture obtained by mixing the nucleic material N with the organic substance.

<Example (2) of specific mixing method>

Meanwhile, in case of adopting a continuous type apparatus, it is possible to use a pipeline mixer or a continuous type bead mill (medium classifier). Further, it is also possible to conduct a liquid leakage countermeasure in a mixer to be used for typical resin processing. In case that a mixing apparatus is separated from an apparatus responsible for the next steps, adoption of a continuous type mixer allows for conduction of transportation to the apparatus responsible for the next steps, simultaneously with mixing, thereby further improving efficiency of the producing process.

<Example (3) of specific mixing method>

It is possible to conduct a mixing step and a low-temperature thermal treating step for removing part of volatile components in one and the same apparatus, by adopting such an external heating type reaction apparatus structured to have a reaction chamber comprising: one shaft arranged in the chamber; and multiple spade-like or sawtooth-like paddles fixed to the shaft in a phase-shifted manner; wherein the reaction chamber has an inner wall surface formed into a cylindrical shape along an outermost locus of a rotation of the paddles, with a minimal gap between the inner wall surface and the paddles, and the paddles are plurally aligned in an axial direction of the shaft.

<Example (4) of specific mixing method>

In the mixing step, it is important to conduct heating together with constant stirring. Examples of an apparatus suitable for this step include: (a) a reaction apparatus structured to have a reaction chamber internally provided with paddles rotated by shafts, respectively, wherein the reaction chamber has an inner wall surface preferably formed into an elongated double-barrel shape substantially along outermost loci of rotations of the paddles, and wherein the paddles are arranged in multiple pairs in axial directions of the shafts in a manner to slidably and mutually articulate the mutually opposing side surfaces of the paddles, respectively; and (b) a (external heating type) reaction apparatus structured to have a reaction chamber comprising: one shaft arranged in the chamber; and multiple spade-like or sawtooth-like paddles fixed to the shaft in a phase-shifted manner; wherein the reaction chamber has an inner wall surface preferably formed into a cylindrical shape along an outermost locus of a rotation of the paddles, with a minimal gap between the inner wall surface and the paddles, and the paddles are plurally aligned in an axial direction of the shaft; and the like. Adopting a reaction apparatus having such a structure enables to obtain a nonaqueous secondary battery-oriented negative electrode material, which material is excellent in quality by virtue of a carbonized product S filled into even pores of the nucleic material N.

Examples of the above (a) type of reaction apparatus exemplarily include "KRC reactor" and "SC processor" manufactured by Kurimoto, Ltd., "TEM" manufactured by Toshiba Machine Zermack Co., Ltd., and "TEX-K" manufactured by The Japan Steel Works Ltd. Further, examples of the above (b) type of reaction apparatus exemplarily include "LOEDIGE Mixer" manufactured by MATSUBO Corporation, "Ploughshare Mixer" manufactured by Pacific Machinery & Engineering Co., Ltd., and "DT dryer" manufactured by Tsukishima Kikai Co., Ltd.

Further, it is preferable in the above (b) type of apparatus to install, on the inner wall surface of the reaction chamber, one or more screw-type disintegrating blades provided in a single stage or multiple stages and configured to rotate rapidly, because this enables to further ensure prevention of occurrence of agglomerates in a mixing operation or a reaction operation thereafter, thereby obtaining a more homogeneous intermediate substance.

Adopting such a reaction apparatus provides exemplary advantages that:

> (i) it is enabled to attach an organic compound or solution thereof in an extremely thin state onto surfaces of graphitic carbon particles, as in the carbonaceous material of the present invention;
> (ii) it is enabled to continuously conduct a thermal treating step until an organic compound or solution thereof is turned into a sufficiently aromatized structure, which is indispensable to production of a carbon material;
> (iii) it is enabled to restrict adherence of an organic compound or solution thereof onto an inner wall of a reaction vessel;
> (iv) the rotation of stirring blades cause a centrifugal vortex flow, to enable a precise mixing of starting materials and to prevent formation of material lumps; thereby causing the nucleic material N and the organic compound or solution thereof to be extremely sufficiently dispersed in a mixing step, and thereby enabling to conduct stirring in a reaction step even after the reactant exhibits no flowability, so that the nucleic material N is homogeneously dispersed and is filled with an organic compound or solution thereof deeply into pores of the nucleic material N, to enable to obtain a homogeneously and thermally treated product which is free of deviation depending on places within the reaction vessel; and
> (v) particularly in case of adopting a reaction apparatus of the (b) type, it is enabled to simultaneously conduct the mixing step, and the step for obtaining an intermediate substance.

<Example (1) of means for achieving effects of the present invention (viscosity lowering, and dilution by solvent)>

To achieve the effects of the present invention, it is required to homogeneously affix the carbonized product S onto all the surface of the nucleic material N including pores thereof, while maintaining the loop structures. To be conducted for this purpose, is an operation to mix and disperse the nucleic material N into and in an "organic compound or solution of organic compound" having a kinematic viscosity of 25 to 75 $mm^2/s$ (cSt) at 50°C, particularly preferably into and in an "organic compound or solution of organic compound" having a kinematic viscosity of 30 to 50 $mm^2/s$ (cSt) at 50°C to thereby contact the nucleic material N with the organic compound or solution thereof, so that the surface and pores of the nucleic material N are substituted with polycyclic aromatic molecules, preferably polycyclic aromatic oligomers having larger molecular weights to be contained in the organic compound or solution thereof, particularly in a heavy oil or solution thereof.

Particularly, in case of adopting a heavy oil having a kinematic viscosity exceeding 200 $mm^2/s$ (cSt) at 50°C, it is preferable to add: a solvent, such as an aromatic hydrocarbon-based organic solvent such as toluene, xylene, and alkylbenzene, and/or a heterocyclic organic solvent such as quinoline and pyridine; into a mixture of the nucleic material N and the organic compound or solution thereof; so as to conduct homogeneous and efficient adsorption or impregnation of the organic compound or solution thereof onto and into the nucleic material N. It is noted that the aromatic hydrocarbon-based organic solvent is more desirable for the present invention.

<Example (2) of means for achieving effects of the present invention (divided charging)>

To obtain a multi-layer structured carbonaceous material while maintaining loop structures on a surface of a nucleic material N such as in the present invention, it is preferable to adopt a batch type mixing apparatus, and to divide an organic compound or solution thereof typically into two or more batches, preferably three to ten batches, and more preferably three to five batches, and/or to successively charge the organic compound or solution thereof into the apparatus in a smaller partial amount each time (over a time which is preferably 1/10, particularly preferably 1/5 of an entire mixing time), with mixing so as to avoid maldistribution of the organic compound or solution thereof on the nucleic material N.

Here, the term "and" of "and/or" means to successively charge a smaller partial amount of each batch to be dividedly added, each time.

It is desirable that the entire mixing time is typically between 3 minutes inclusive and 10 minutes inclusive, preferably between 3 minutes inclusive and 8 minutes inclusive, and more preferably between 3 minutes inclusive and 6 minutes inclusive. This is because, successively charging a smaller partial amount of an organic compound or solution thereof each time, enables the organic compound or solution thereof to be affixed to the surface of the nucleic material N more homogeneously.

<Example (3) of means for achieving effects of the present invention (preliminary solvent treatment)>

In the present invention, it is also useful to previously treat a nucleic material N with a solvent. Using a nucleic material N, which was once immersed in an aromatic solvent to substitute the surface and pores of the former with the latter, and which has been thereafter separated from an excessive solvent, allows for obtainment of an effect to improve a wettability of the nucleic material N relative to the organic compound or solution thereof. The addition ratio of the organic solvent is desirably such that the state, where a solvent is added into the mixture of the nucleic material N and the organic compound or solution thereof, is made to be a slurry state. It is required to dissolve an organic compound into a solvent when the former is solid, and it is required to adjust a viscosity of an organic compound when the same is liquid. It is noted that all the components of the organic compound are not required to be dissolved when the latter is to be dissolved, and it is enough that the dissolved mixture is turned into a liquidus substance having a viscosity within a specific range. Particularly, adopting a heavy oil as an organic compound occasionally causes fluctuation of an electrode performance, when the kinematic viscosity at 50°C exceeds 75 $mm^2/s$ (cSt). L. This is considered to be due to a fact that it is then made difficult to fill the organic compound or solution thereof into pores of the nucleic material N.

<Mixed atmosphere>

In this mixing step, although the atmosphere within the reaction apparatus is preferably an inert atmosphere or a non-oxidative atmosphere, it is not required to particularly limit the atmosphere insofar as in a condition that the intermediate substance is not accompanied by degradation due to oxidation. Further, keeping the internal pressure of the reaction vessel at a reduced pressure state, enables to enhance an effect to degasify a fine powder to improve a dispersibility, and to enhance an effect to remove volatile components from the mixed slurry of the nucleic material N and the organic compound or solution thereof. Although the thermal treatment temperature in this mixing step varies in terms of an optimum value depending on the type of the organic compound or solution thereof, such a temperature is to be at or above a boiling point of a solvent, and typically within a range of 50 to 600°C, preferably within a range of 60 to 500°C.

<Desolvation at latter half of mixing step>

The mixture, where the nucleic material N has been homogeneously dispersed in the mixing step and where the organic compound or solution thereof has also been sufficiently filled into pores of the nucleic material N, is heated in this mixing step while being kneaded (stirred), and is collected as an intermediate product, where the nucleic material N and the organic compound or solution thereof have been highly dispersed and where a certain degree of removal of volatile components and heating have been applied, and the intermediate product is supplied to a thermal treating step (carbonizing step).

(B) Thermal treating step

The intermediate substance, from which a part of volatile components have been removed in the mixing step and which comprises the polycondensed organic compound or solution thereof and the nucleic material N, is heated in this thermal treating step under flow of inert gas such as nitrogen gas, carbonic acid gas, argon gas, or the like. In this thermal treating step, the thermochemical reaction of the carbon precursor is progressed, so that oxygen, nitrogen, hydrogen, and the like left in the composition of the precursor are expelled to the outside of the system, and structural defects are eliminated depending on the degree of the thermal treatment, thereby enhancing a degree of graphitization.

As thermal treatment conditions for this thermal treating step, the highest temperature to be achieved is important. Although the lower limit of such a temperature is slightly different depending on the type of the aromatized heavy oil, the heat history, and the like, the temperature is 600°C or higher, preferably 800°C or higher, and more preferably 850°C or higher. Temperatures lower than it lead to residual hydrogen and the like, thereby occasionally leading to an insufficient carbonization. In turn, the upper limit of such a temperature can be basically raised to a temperature where a structural order exceeding the crystal structure of the nucleic material N is not possessed. Thus, the upper limit temperature of the thermal treatment is typically 3,000°C or lower, preferably 2,500°C or lower, more preferably 2,000°C or lower, and particularly preferably 1,500°C or lower. Temperatures higher than it occasionally lead to an increased cost for the thermal treatment. Under such a thermal treatment condition, it is possible to arbitrarily set a temperature elevation rate, a cooling rate, a thermal treatment time, and the like, depending on the purpose. Further, it is also possible to elevate the temperature to a predetermined temperature, after a thermal treatment in a relatively lower temperature region.

In the step for thermally treating the mixture, it is preferable to thermally treat the mixture containing volatile components by a continuous type heating furnace to thereby affix a carbonized product of an organic compound including substantially no volatile components onto surfaces of graphitic carbon particles, from a standpoint to more homogeneously affix the carbonized product S to the nucleic material N.

<Example of specific carbonizing method>

The apparatus suitable for this thermal treating step is not particularly limited, and examples thereof include:

a continuous type heating furnace characterized in that the heating furnace is of a type that a heating object is moved internally of the heating furnace, and that the heating furnace comprises: at least two furnaces comprising a former stage furnace for heating the heating object to remove volatile components contained therein, and a latter stage furnace for further heating the heating object having passed through the former stage furnace to a high temperature to thereby improve a carbonization degree; and
an intermediate chamber located between the two furnaces;
wherein the former stage furnace as well as the latter stage furnace are internally provided with heating elements, respectively; wherein doors are installed at an entrance of the former stage furnace, at an exit of the latter stage furnace, between the former stage furnace and intermediate chamber, and between the latter stage furnace and intermediate chamber, respectively; and wherein the atmosphere within the furnaces are made to be controllable.

The above-mentioned continuous type heating furnace is to be preferably characterized in that the former stage furnace is internally provided with a shielding element made of a thermally good conductor for isolating the heating element from the heating object, that an opening for extracting a gas from the former stage furnace is provided near an entrance of the former stage furnace and at a location near the floor face, and that the gas flow in the former stage furnace is directed from the exit to the entrance. It is noted that the heating furnace to be used in this step may be of a batch type or continuous type, and may be provided in a single set or in multiple sets.

(C) Powderizing step

The multi-layer structured carbonaceous material, where the carbonized product S has been complexed to the nucleic material N in the thermal treating step in a state where the carbonized product S has covered a part or a whole of the surface of the nucleic material N, is subjected to a powderizing treatment such as pulverizing, disintegrating, classifying, or the like as required, and turned into a nonaqueous secondary battery-oriented negative electrode material.

It is noted that the powderizing step may be conducted between the (A) mixing step and the (B) thermal treating step.

(3) Multi-layer structured carbonaceous material

In the present invention, the nucleic material N and an organic compound as a precursor of a carbonized product S are mixed, and the mixture is carbonized, fired, and pulverized, thereby enabling to finally obtain a multi-layer structured carbonaceous material where the carbonized product S obtained by carbonizing the organic compound is affixed to the surface of the nucleic material N which is graphitic carbon particles.

The present invention resides in a multi-layer structured carbonaceous material to be obtained by mixing graphitic carbon particles with an organic compound followed by thermal treatment, wherein loop structures are present at edge portions of the graphitic carbon particles, respectively, and the carbonized product of the organic compound is affixed to the surfaces of the particles while keeping the loop structures. Thus, the graphitic carbon particles in the multi-layer structured carbonaceous material of the present invention obtained by the thermal treatment, maintains the loop structures of the above-described "nucleic material N also embracing thermally-treated product P". For example, since it is desirable that the thermally-treated product P is to have 3 or more loop structures per 5 nm at its surface in a TEM image as described above, it is desirable that graphitic carbon particles in the multi-layer structured carbonaceous material of the present invention obtained by thermal treatment each also include 3 or more loop structures per 5 nm at a surface of the particle. Further, when the structure, physical properties, and the like of the nucleic material N as the starting material are seen in graphitic carbon particles in a certain multi-layer structured carbonaceous material, the multi-layer structured carbonaceous material is embraced within the multi-layer structured carbonaceous material of the present invention.

In the present invention, it is preferable that the amount of the carbonized product of the organic compound on the surface of the nucleic material N is a required minimum. Namely, it is to affix the carbonized product of the organic compound to the nucleic material N, such that the carbonized product is made to be between 0.1 part by weight inclusive and 4 parts by weight inclusive relative to 100 parts by weight of nucleic material N, as a carbon residue amount. The carbonized product of the organic compound is affixed, such that the carbon residue amount is made to be more preferably between 0.5 part by weight inclusive and 3 parts by weight inclusive, particularly preferably between 0.65 part by weight inclusive and 2 parts by weight inclusive.

The "carbon residue amount relative to 100 parts by weight of nucleic material N" is affected by a kind of an organic compound and a mixing ratio thereof, and is obtained from the following equation by previously measuring a "carbon residue ratio of organic compound" having been obtained according to a micro method among the test methods prescribed by JIS K2270:

```
[carbon residue amount of carbonized product of

organic compound relative to 100 parts by weight of nucleic

material N]

      =100×[carbon residue ratio of organic

compound]×([weight of organic compound]/[weight of nucleic

material N])
```

Actually, the kind of the organic compound and the mixing amount thereof are determined, such that the amount of the carbonized product, which is obtained by multiplying the carbon residue ratio by a weight of the organic compound to be used, is made to be between 0.1 part by weight inclusive and 4 parts by weight inclusive relative to 100 parts by weight of nucleic material N.

Excessively smaller carbon residue ratios in the present invention lead to insufficient filling of the organic compound into pores of the nucleic material N to thereby probably expose graphite at the surface of the multi-layer structured carbonaceous material such that a reactivity of the carbonaceous material with an electrolytic solution is increased, thereby occasionally leading to insufficient wetting of the multi-layer structured carbonaceous material acting as an active material with the electrolytic solution in a state that pores are left as they are in the nucleic material N, thereby occasionally causing a problem such as a deteriorated surface state of the nucleic material N where intercalation and deintercalation of lithium ion are conducted.

Meanwhile, when the carbon residue amount is so much to exceed 4 parts by weight, an excessive amount of carbonized product of an organic compound has been affixed to the surface of the nucleic material N, so that the carbonized product tends to be broken and peeled upon pressing an electrode coated with a multi-layer structured carbonaceous material powder for an increased density. This exposes graphite crystals of the nucleic material N at the surface of the multi-layer structured carbonaceous material, thereby occasionally increasing its reactivity with an electrolytic solution. This phenomenon is made more significant, as the packing density is increased for an increased capacity. From the above result, such a problem appears to have been conventionally caused that an irreversible capacity upon initial charge and discharge is increased, thereby exemplarily causing deteriorated cycle characteristics.

Nonetheless, adjusting the carbon residue amount to the above noted value, makes it easier to affix a carbonized product of an organic compound to a surface of the nucleic material N while preferably maintaining loop structures at edge portions of the nucleic material N.

It also appears that, since the carbonized product of the organic compound is thinly affixed to surfaces of graphitic carbon particles, a pulverizing treatment of the multi-layer structured carbonaceous material is made unnecessary in the powderizing step, so that the surface of the multi-layer structured carbonaceous material is made to be insusceptible to damages due to pulverization. This appears to exhibit excellent battery characteristics (particularly, decreased irreversible capacity). Further, unnecessity of a pulverizing treatment increases the possibility to remarkably improve the productivity.

Although the carbonaceous material of the present invention is capable of taking an arbitrary shape such as a particulate shape, fibrous shape, or the like as a whole, the carbonaceous material is to be preferably spherical, or elliptical substantially similar thereto, as a whole. Its volume average particle size is necessarily from 2 to 70 $\mu$m, preferably 4 to 40 $\mu$m, more preferably 5 to 35 $\mu$m, and more preferably 7 to 30 $\mu$m. Particle diameters larger than this range occasionally lose flatness and smoothness of a surface of an electrode. In turn, particle diameters smaller than this range lead to increased specific surface areas, thereby occasionally increasing irreversible capacities.

The tap density of the carbonaceous material of the present invention has a lower limit which is essentially 0.80 g/cm$^3$ or more, preferably 0.85 g/cm$^3$ or more, and more preferably 0.90 g/cm$^3$ or more, and it is desirable to control its upper limit to a tap density of 1.40 g/cm$^3$ for spherical particles having uniform particle sizes. Multi-layer structuring sometimes improves a tap density, and sometimes brings about an effect to introduce further roundness to shapes of particles. Tap densities smaller than it occasionally make it difficult to fabricate an electrode having a high density.

It is preferable for the carbonaceous material of the present invention that, for particles having an averaged particle diameter of 10 to 40 $\mu$m which are photographed by a flow-type particle image analysis apparatus capable of photographing several thousands of particles dispersed in a liquid one particle by one particle by a CCD camera to thereby calculate average shape parameters of the particles, the "average circularity" is 0.94 or more, which circularity is a ratio of a circumferential length of a circle corresponding to an area of a projected particle, relative to a circumferential length of the projected particle image (this circularity approaches 1 as the particle image is closer to a perfect circle, and becomes a smaller value as the particle is more complicated in shape). The average circularity is correlated to the above noted tap density, and circularities of multi-layer structured carbonaceous material smaller than the average circularity occasionally make it difficult to fabricate a uniform electrode.

Further, it is indispensable for the R value of the carbonaceous material of the present invention to be 0.15 or more, which R value is a ratio of a scattering intensity at 1,360 cm$^{-1}$ to a scattering intensity at 1,580 cm$^{-1}$ in an argon ion laser Raman spectrum adopting argon ion laser beam at a wavelength of 514.5 nm. Further, the R value of the carbonaceous material is preferably smaller than the R value of the nucleic material N, within a range that the carbon residue amount of the carbonized product S is 4 parts by weight or less relative to 100 parts by weight of nucleic material N. The former is preferably between 0.2 inclusive and 0.4 inclusive, and more preferably between 0.25 inclusive and 0.35 inclusive. Being within such a range is desirable for obtainment of excellent battery characteristics.

The specific surface area of the carbonaceous material of the present invention as measured by a BET method is desirably 10 m$^2$/g or less, preferably within a range of 1 to 9 m$^2$/g, more preferably 1.5 to 7 m$^2$/g, and particularly preferably 2 to 6 m$^2$/g. Specific surface areas larger than this range occasionally increase initial irreversible capacities upon application of the carbonaceous material to batteries. Further, the ratio of a BET specific surface area of the carbonaceous material relative to a BET specific surface area of the nucleic material N, is typically between 0.40 inclusive and 1.00 inclusive, preferably between 0.40 inclusive and 0.90 exclusive, and the lower limit thereof is preferably 0.45 or more, and more preferably 0.60 or more. Ratios of this kind less than 0.40 indicate that the carbonized product S is relatively numerous (thick) in affixation, thereby occasionally failing to sufficiently exhibit the effect in the present invention. It is particularly preferable that both the range of the specific surface area and the range of the specific surface area ratio are combinedly satisfied.

Further, assuming that an integral value of a spectral intensity within a wavelength range near 1,360$\pm$100 cm$^{-1}$ is Ya, and an integral value of a spectral intensity within a wavelength range near 1580$\pm$100 cm$^{-1}$ is Yb, the ratio of Yb to Ya, i.e., the value of G=Yb/Ya is preferably smaller than a G value of the nucleic material N, and is preferably 3.0 or less, more preferably within a range of 1.2 to 2.5, particularly preferably 1.4 to 2.1. R values or G values exceeding the above range considerably deteriorate the crystallinity of the carbonized product S, thereby occasionally bringing about a decreased capacity in battery characteristics.

Further, the carbonaceous material is to typically have a half-value width ($\Delta$v) of 19 cm$^{-1}$ or more for a peak at 1,580 cm$^{-1}$ in an argon laser Raman spectrum, preferably 20 cm$^{-1}$ or more, more preferably 22 cm$^{-1}$ or more, and particularly preferably 24 cm$^{-1}$ or more, and the upper limit thereof is typically 31 cm$^{-1}$ or less, preferably 30 cm$^{-1}$ or less, more preferably 28 cm$^{-1}$ or less, and particularly preferably 26 cm$^{-1}$ or less. Excessively narrower and wider half-value widths ($\Delta$v) are sometimes disadvantageous, by the same reasons of excessively smaller and larger R values and G values.

The crystallinity of the carbonaceous material of the present invention is substantially the same as the crystallinity of the nucleic material N. Namely, the interlayer spacing (d002) of (002) plane of the carbonaceous material to be obtained by X-ray wide angle diffraction using Cu K$\alpha$ radiation as a radiation source, and the crystallite size (Lc) in the c-axis direction of the carbonaceous material, are substantially the same as those of the nucleic material N, respectively. Thus, also for the carbonaceous material of the present invention, such characteristic values are to be preferably within the ranges previously described in the items for the nucleic material N.

(4) Nonaqueous secondary battery-oriented negative electrode

The carbonaceous material can be molded into an electrode shape according to a known method, and preferably used as a negative electrode of a nonaqueous secondary battery, particularly a lithium ion secondary battery.

Negative electrodes constituting nonaqueous secondary batteries each comprise an active material layer formed on a current collector, the active material layer containing a negative electrode material, an electrode-plate molding binder, a thickener, and an electroconductive material. The active material layer is typically obtained by preparing a slurry containing a negative electrode material, an electrode-plate molding binder, a thickener, an electroconductive material, and a solvent, and by coating it onto a current collector, followed by drying and pressing.

Usable as the electrode-plate molding binder are arbitrary ones, insofar as it is a material which is exemplarily stable against a solvent to be used upon production of an electrode, and against an electrolytic solution. Examples thereof include polyvinylidene fluoride, polytetrafluoroethylene, polyethylene, polypropylene, styrene-butadiene rubber, isoprene rubber, butadiene rubber, ethylene-acrylic acid copolymer, ethylene-methacrylic acid copolymer, and the like. The electrode-plate molding binder is to be used at a weight ratio of "negative electrode material/electrode-plate molding binder", which is within such a range of typically 90/10 or more, preferably 95/5 or more, and typically 99.9/0.1 or less, and preferably 99.5/0.5 or less. Excessively smaller amounts of the binder to be used upon molding the electrode-plate bring about deteriorated electrode-plate strengths, and excessively large amounts lead to formation of resistive components within electrodes such that intercalation and deintercalation of lithium are not conducted smoothly, thereby occasionally causing lowering of charge capacity, deterioration of load characteristic, and deterioration of cycle characteristic.

Examples of the thickener include carboxylmethyl cellulose, methyl cellulose, hydroxymethyl cellulose, ethyl cellulose, polyvinyl alcohol, oxidized starch, phosphorylated starch, casein, and the like.

Examples of the electroconductive material include: metal materials such as copper, nickel, and the like; and carbon materials such as graphite, carbon black, and the like.

Examples of material of the current collector include copper, nickel, stainless, and the like. Among them, copper foils are preferable, from a standpoint of readiness of fabrication into thin-films, and a standpoint of cost.

Although the density of the negative electrode comprising the carbonaceous material of the present invention is different depending on the usage, it is typically 1.45 g/cm$^3$ or more, preferably 1.50 g/cm$^3$ or more, more preferably 1.55 g/cm$^3$ or more, and particularly preferably 1.60 g/cm$^3$ or more, for usage giving importance to a capacity. Further, it is typically 2.00 g/cm$^3$ or less, and preferably 1.85 g/cm$^3$ or less. It is preferably 1.80 g/cm$^3$ or less, because excessively lower densities occasionally lead to capacities of batteries per unit volume which are not necessarily sufficient, while excessively higher densities lead to deteriorated high load characteristic of charge and discharge. It is noted that the term "active material layer" means a mixture layer on the current collector, which layer comprises the active material, electrode-plate molding binder, thickener, electroconductive material, and the like; and the density of the active material layer means a bulk density thereof at the time of assembly into a battery.

Upon fabrication of the negative electrode in the present invention, pressing is conducted by a roll press until a predetermined density is achieved, after coating and drying by the above-mentioned procedure. The press load (linear pressure) for achieving an electrode density of 1.60 g/cm$^3$ is preferably between 200 kg/5 cm inclusive and 550 kg/5 cm inclusive, more preferably between 200 kg/5 cm inclusive and 500 kg/5 cm inclusive, and particularly preferably between 200 kg/5 cm inclusive and 400 kg/5 cm inclusive.

The situation where the load (press load) to be then applied to a negative electrode is larger than the above noted load, implies that the amount of the carbonized product S attached to surfaces of particles of the multi-layer structured carbonaceous material is large and thus the particles are hard, such that the carbonized product S is apt to be broken and peeled by the press in a manner to uncover the surface of the nucleic material N to enhance a reactivity thereof with an electrolytic solution to be described later, thereby considerably affecting the battery performance. Namely, the irreversible capacity particularly upon initial charge and discharge is then increased, thereby occasionally causing further deterioration of cycle characteristics. In turn, the situation where the press load is smaller than the above noted load, implies that, although breakage and peeling of the carbonized product S are not caused, the carbonized product S is insufficient in amount so that an uncoated surface of the nucleic material is present, to enhance a reactivity of the nucleic material with an electrolytic solution, thereby considerably affecting the battery performance. Namely, similarly to the above, the irreversible capacity particularly upon initial charge and discharge is then increased, thereby occasionally causing further deterioration of cycle characteristics.

The coated and dried electrode-plate was cut into a size of 5 cm in length and 7 cm in width, and subjected to a pretreatment under a predetermined condition, followed by measurement of a specific surface area by a BET method. The specific surface area at this time is supposed to be A. Further, the same electrode-plate was pressed by a roll press such that the electrode density was brought to 1.60 g/cm$^3$, followed by measurement of the specific surface area by the same method. The specific surface area at this time is supposed to be B. Here, the ratio C (C=B/A) of the electrode specific surface area after pressing relative to the electrode specific surface area before pressing, is preferably between 0.90 inclusive and 1.2 inclusive, more preferably more than 1.0, and equal to or less than 1.15, more preferably equal to or less than 1.1, and particularly preferably equal to or less than 1.05. C's equal to or more than 1.2 imply a state that the carbonized product S affixed to the surface of the nucleic material N is broken, and the surface of the nucleic material is exposed. Values of C closer to 1.0 indicate that the carbonized product S is not broken by the press, and C's closer and closer to 1.0 are more preferable for exhibition of the above-mentioned effect of the present invention. This is also true for the situation where the ratio is less than 1.0, and values thereof closer to 1.0 are more preferable.

(5) Nonaqueous secondary battery

The nonaqueous secondary battery-oriented negative electrode produced by adopting the carbonaceous material of the present invention is extremely useful as a negative electrode of a nonaqueous secondary battery, such as particularly a lithium ion secondary battery.

Selections are not particularly limited, for members required for battery constitution, such as a positive electrode, an electrolytic solution, and the like for constituting such a nonaqueous secondary battery. Although materials and the like of members for constituting a nonaqueous secondary battery are exemplarily mentioned hereinafter, usable materials are not limited to these specific examples.

Typically, the nonaqueous secondary battery of the present invention includes, at least, the negative electrode of the present invention, a positive electrode, and an electrolyte.

The positive electrode comprises an active material layer formed on a positive electrode current collector, the active material layer containing a positive electrode active material, an electroconductive material, and an electrode-plate molding binder. The active material layer is typically obtained by preparing a slurry containing a positive electrode active material, an electroconductive material, and an electrode-plate molding binder, and by coating it onto a current collector, followed by drying.

Exemplarily usable as the positive electrode active material are materials capable of intercalating and deintercalating lithium, including: lithium-transition metal complex oxide materials such as lithium-cobalt oxide, lithium-nickel oxide, lithium-manganese oxide, and the like; transition metal oxide materials such as manganese dioxide, and the like; and carbonaceous materials such as graphite fluoride. Specifically and exemplarily usable are $LiFePO_4$, $LiFeO_2$, $LiCoO_2$, $LiNiO_2$, $LiMn_2O_4$, and non-proportional compounds of them, $MnO_2$, $TiS_2$, $FeS_2$, $Nb_3S_4$, $Mo_3S_4$, $CoS_2$, $V_2O_5$, $P_2O_5$, $CrO_3$, $V_3O_3$, $TeO_2$, $GeO_2$, $LiNi_{0.33}Mn_{0.33}Co_{0.33}O_2$, and the like.

As the positive electrode current collector, it is preferable to use a metal or an alloy thereof, which forms a passivation film at its surface by virtue of anodic oxidation in an electrolytic solution, and examples thereof exemplarily include metals belonging to IIIa, IVa, Va groups (3B, 4B, 5B groups) and alloys thereof. Specific examples thereof include Al, Ti, Zr, Hf, Nb, Ta, and alloys containing these metals; and preferably usable are Al, Ti, Ta, and alloys containing these metals. Particularly, Al and an alloy thereof are preferable, because they are light-weighted and are thus high in energy density.

Although examples of the electrolyte include an electrolytic solution, a solid electrolyte, a gel-like electrolyte, and the like, the electrolytic solution, particularly a nonaqueous electrolytic solution is preferable among them. Usable as the nonaqueous electrolytic solution is that comprising a nonaqueous solvent containing a solute dissolved therein.

Usable as the solute are an alkali metal salt, a quaternary ammonium salt, and the like. Specifically, it is preferable to adopt one or more kinds of compounds selected from a group consisting of $LiClO_4$, $LiPF_6$, $LiBF_4$, $LiCF_3SO_3$, $LiN(CF_3SO_2)_2$, $LiN(CF_3CF_2SO_2)_2$, $LiN(CF_3SO_2)(C_4F_9SO_2)$, and $LiC(CF_3SO_2)_3$, for example. It is particularly preferable to use these solutes, in a manner combined with a nonaqueous solvent containing a cyclic carbonate and a linear carbonate to be described later.

Exemplarily usable as the nonaqueous solvent are: cyclic carbonates such as ethylene carbonate, butylene carbonate, and the like; cyclic ester compounds such as $\gamma$-butyrolactone, and the like; linear ethers such as 1,2-dimethoxyethane, and the like; cyclic ethers such as crown ether, 2-methyltetrahydrofuran, 1,2-dimethyltetrahydrofuran, 1,3-dioxolane, tetrahydrofuran, and the like; linear carbonates such as diethyl carbonate, ethyl methyl carbonate, dimethyl carbonate, and the like; for example. The solute and solvent may be each selectively used solely in one kind, or mixedly in two or more kinds. Preferable among them are those where each nonaqueous solvent contains cyclic carbonate and linear carbonate. It is also possible to add thereto a compound such as vinylene carbonate, vinyl ethylene carbonate, succinic anhydride, maleic anhydride, propane sultone, diethyl sulfone, and the like. Further, preferable examples include difluorophosphate such as lithium difluorophosphate and the like.

Contents of these solutes in an electrolytic solution are each preferably 0.2mol/L or more, particularly preferably 0.5mol/L or more, and preferably 2.0mol/L or less, and particularly preferably 1.5mol/L or less. Excessive solutes cause lowered transport numbers of lithium ions in electrolytic solutions, respectively, thereby occasionally deteriorating electroconductivity of the entire battery system.

Among the above nonaqueous secondary batteries, the nonaqueous secondary battery fabricated by combining the negative electrode of the present invention with a metal chalcogenide-based positive electrode, and an organic electrolytic solution mainly containing a carbonate-based solvent, is high in capacity, is low in irreversible capacity to be recognized in an initial cycle, is high in rapid charge-discharge capacity (excellent in rate characteristic), is excellent in cycle characteristic, is excellent in storage stability and reliability of a battery when left to stand still under high temperature, and is extremely excellent in high efficiency discharge characteristic and in discharge characteristic at low temperatures.

Typically provided between the positive electrode and the negative electrode is a separator for preventing a physical contact between the positive electrode and negative electrode. The separator is to be preferably high in ion permeability and low in electrical resistance. Although the separator is not particularly limited in terms of material and shape, such a separator is preferable which is stable against an electrolytic solution and is excellent in retentivity thereof. Specific examples include a porous sheet or nonwoven fabric made of a material of polyolefin such as polyethylene, polypropylene, or the like.

The shape of the nonaqueous secondary battery of the present invention is not particularly limited, and examples of shape include: a cylinder type comprising sheet electrodes and a separator formed into spiral shapes; a cylinder type in an inside-out structure including pellet electrodes combined with a separator therebetween; a coin type including stacked pellet electrodes and a separator therebetween.

Examples:

Although specific embodiments of the present invention will be explained in detail with reference to Examples, the present invention is not limited to these Examples.

<Analysis and evaluation method of powder physical property, and electrode or battery>

[Interlayer spacing (d002) of (002) plane, and crystallite size (Lc)]

The measurement and analysis of wide angle X-ray diffractometry were based on a method established by Japan Society for the Promotion of Science (so-called "gakushin" method). Added to and mixed with the nucleic material N or a powder of multi-layer structured carbonaceous material, was a high purity silicon powder for X-ray standard of 20 mass%, and the resultant mixture was charged into a sample cell, followed by measurement of a wide angle X-ray diffractometry curve by a reflection-type diffractometer having a radiation source of Cu K$\alpha$ radiation monochromized by a graphite monochrometer.

[Raman spectrum analysis]

Using a Raman spectroscope, "Raman spectroscope manufactured by JASCO Corporation", and allowing a sample to naturally fall into a measurement cell to fill the former into the latter, measurement was conducted while irradiating argon ion laser beam into the measurement cell and rotating the measurement cell within a plane perpendicular to the laser beam. The measurement conditions were set as follows:

Wavelength of argon ion laser beam: 514.5 nm
Laser power on sample: 15 to 25 mW
Resolution: 4 cm$^{-1}$
Measuring range: 1,100 to 1,730 cm$^{-1}$
Peak intensity measurement, peak half-value width measurement: background processing, smoothing processing (simple average, convolution, 5 points)

Measured were: an R value which is a ratio of a scattering intensity at 1,360 cm$^{-1}$ to a scattering intensity at 1,580 cm$^{-1}$ in an argon ion laser Raman spectrum; a G value=Yb/Ya, which is a ratio of an integral value Ya of a spectral intensity within a wavelength range near 1360$\pm$100 cm$^{-1}$, relative to an integral value Yb of a spectral intensity within a wavelength range near 1580$\pm$100 cm$^{-1}$; and a peak half-value width ($\triangle$v) near 1,580 cm$^{-1}$.

[Measurement of volume average particle size]

Suspended into 10mL of 0.2 mass% water solution of polyoxyethylene sorbitan monolaurate (example thereof: Tween20 (Registered Trade-Mark)) as a surfactant, was 0.01g of graphitic complex particles; the suspension was introduced into "LA-920" manufactured by HORIBA, Ltd., i.e., a commercially available laser diffraction/scattering type particle size distribution measuring apparatus; and ultrasonic waves at 28kHz were irradiated thereto at a power of 60W for 1 minute; followed by measurement of an average particle diameter based on volume (median diameter) in the measuring apparatus, and this was regarded as a "volume average particle size".

[Measurement of tap density]

Adopting "Tap Denser KYT-4000" manufactured by SEISHIN ENTERPRISE Co., Ltd. as a powder density measurement device, particles of an applicable powder were dropped into a cylindrical tap cell having an inner diameter of 1.6 cm and a volume of 20 cm$^3$ through a sieve having an aperture of 355 $\mu$m to fully fill the cell; thereafter the weight of the powder was measured, and a tap of stroke length of 10 mm was then conducted 500 times; followed by measurement of a volume of the powder, to obtain its density as weight/volume.

[Measurement of BET specific surface area]

This was measured based on a BET 6-point method by using a specific surface area measuring apparatus "Gemini 2360" manufactured by SHIMADZU CORPORATION, in a nitrogen gas adsorption flowing method. 1.0g of each sample was filled into a cell, heated at 350°C under vacuum for 15 minutes to conduct a pretreatment, and then cooled down to a temperature of liquid nitrogen; a gas of nitrogen 30% and He 70% was saturation adsorbed thereto; followed by heating up to a room temperature, and the desorbed gas amount was measured; and the specific surface area was calculated from the obtained result by a typical BET 6-point method.

[Measurement of average circularity]

0.2g of a sample was suspended into 50mL of 0.2vol% of polyoxyethylene sorbitan monolaurate (example thereof: Tween20 (Registered Trade-Mark)) as a surfactant; and ultrasonic waves at 28kHz were irradiated thereto at a power of 60W for 1 minute, by using a flow type particle image analyzing apparatus "FPIA-2000 manufactured by Sysmex Industrial Corp.", followed by conduction of measurement. The detection range was specified to be 0.6 to 400 $\mu$m, and the average circularity was obtained as an average of those values of circularities to be provided by the following equation, which values were measured for particles within a range of averaged particle diameter of 10 to 40 $\mu$m, respectively:

```
Circularity=(circumferential length of circle having

the same area as projected area of

particle)/(circumferential length of projected image of

particle)
```

[Surface observation by transmission electron microscope (TEM)]

Ethanol was poured into a graphite powder placed in a vial bottle, the powder was dispersed therein within an ultrasonic washer for 15 seconds, then the dispersion was dropped onto a micro grid and dried to prepare an observation sample, followed by conduction of observation thereof by a transmission electron microscope "JEM-2010 manufactured by JOEL Ltd.", at an acceleration voltage of 200 kV.

[Fabrication method of negative electrode, and measurement of press load]

Stirred for 5 minutes by a hybrid mixer manufactured by KEYENCE Corporation was a mixture of: 20.00±0.02 g of a multi-layer structured carbonaceous material; 20.00±0.02 g of 1 mass% carboxymethyl cellulose (CMC) water solution; and 0.25±0.02 g of an aqueous dispersion of styrenebutadiene rubber (SBR) having a weight-average molecular weight of 270,000; thereby obtaining a slurry. This slurry was coated onto a copper foil of 18 $\mu$m thickness as a current collector by a doctor blade method at a width of 5 cm such that the negative electrode material was attached to the foil in an amount of 11.0±0.1 mg/cm$^2$, followed by air-drying at room temperature. After further drying at 110°C for 30 minutes, it was roll pressed by a roller having a diameter of 20 cm. This was adjusted so that a density of the active material layer after 24 hours from the press forming, was made to be 1.60 g/cm$^3$, thereby obtaining a negative electrode sheet. The press load was measured upon roll pressing.

[Fabrication method (1) of nonaqueous secondary battery, fabrication method of coin battery, and evaluation method]

The above electrode was used in a manner to be opposed to a lithium metal electrode through a separator impregnated with an electrolytic solution, to fabricate a 2016 coin-type cell ($\phi$20 mm, thickness 1.6 mm), and a charge and discharge test was conducted therefor. Used as the electrolytic solution was a mixture comprising a mixed solvent of ethylene carbonate, ethylmethyl carbonate, dimethyl carbonate, and containing LiPF$_6$ dissolved therein. After leaving the battery in an open circuit state for 24 hours, the charge was conducted as a constant current-constant voltage charge, and the discharge was conducted as a constant current discharge. The charge was conducted by keeping a current value at 0.2 mA/cm$^2$ (0.05C) until an electric potential difference between both electrodes became 0 V, and the discharge was conducted until 1.5 V. The charge and discharge were totally conducted for 3 cycles, under a condition that the charge was stopped at the time where the charge capacity became 350 mAh/g only at the initial charge.

After the second cycle, charge and discharge were conducted under a condition that the charge was stopped at the time where the current value reached 0.02 mA, and the discharge was stopped at the time where the voltage reached 1.5 V. Shown in Table 1 is a discharge capacity result at the third cycle. Each irreversible capacity in this Table is a value obtained by subtracting a discharge capacity value from a charge capacity value, and each charge/discharge efficiency is a value obtained by dividing a discharge capacity by a charge capacity. The discharge capacity at the third cycle is to be preferably 350 mAh/g or more, and the initial irreversible capacity is preferably 40 mAh/g or less, preferably 35 mAh/g or less, and particularly preferably 33 mAh/g or less.

[Fabrication method (2) of nonaqueous secondary battery, fabrication method of 18-cylindrical battery, and evaluation method]

Kneaded and dispersed by a commercially available planetary mixer was a mixture of the multi-layer structured carbonaceous material, a carboxymethyl cellulose (CMC) water solution, and an aqueous dispersion of styrenebutadiene rubber (SBR), thereby preparing a slurry. This slurry was coated onto a rolled copper foil having a thickness of 10 $\mu$m, then dried, and roll pressed to achieve an electrode density of 1.75 g/cm$^3$, followed by cutting, to fabricate an electrode. This electrode was used as a negative electrode, while a positive electrode was established by an electrode obtained by coating lithium cobaltate onto an aluminum foil, by drying it, and by thereafter roll pressing it; and these electrodes were wound together with a separator and encapsulated therewith into an iron-made cylindrical metal can ($\phi$18 mm, length of 650 mm) plated by nickel, and the electrolytic solution, which was the same as that used upon evaluation of the 2016 coin-type battery, was injected into the can, followed by encapsulation of the metal can, to fabricate a cylindrical battery.

This cylindrical battery was kept at 45°C for 7 days in a state that the battery potential was 4.05 V, followed by charge and discharge of 300 cycles at 25°C. The charge and discharge were implemented such that the charge was made to be constant current-constant voltage charge at 0.7C, and the discharge was made to be constant current discharge at 1.0C. Cut-off conditions were made to be 100 mA upon each charge, and 4.2 V upon each discharge. Discharge capacity retentions of this evaluation at the 50th cycle and 100th cycle are listed in Table 2. The discharge capacity retention at the 50th cycle at 25°C and 1C, is preferably 88% or more, and more preferably 90% or more. Further, the discharge capacity retention at the 100th cycle under the same condition, is preferably 85% or more, and more preferably 88% or more.

Example 1

(A) Mixing step

Charged into an FKM300D type LOEDIGE Mixer (internal volume of 300L) manufactured by MATSUBO Corporation through a material charging inlet thereof, as graphitic carbon particles (nucleic material N), was 150 kg of spherodized natural graphite (volume average particle size of 16.3 $\mu$m; tap density of 0.99 g/cm$^3$; BET specific surface area of 7.3 m$^2$/g; interlayer spacing (d002) of (002) plane of 0.3345 nm; crystallite size (Lc) of 1,000 nm or more; R value of 0.26; and true density of 2.26 g/cm$^3$); and further charged thereinto was 1 kg of ethylene heavy end tar (manufactured by Mitsubishi Chemical Corporation; kinematic viscosity at 50°C was 50 mm$^2$/s (cSt)). to be obtained upon decomposition of naphtha, as a starting material of a carbonized product S; and then the operation was started. Loop structures were present at an edge portion of each of the graphitic carbon particles (nucleic material N).

The operational condition was such that the revolution speed of spade type stirring blade was 200rpm, the revolution speed of a disintegrating blade was 2,000rpm, and the temperature inside the apparatus was a room temperature. This operation was conducted for 10 minutes. Further, warm water was flowed through a jacket of the mixer, thereby warming it at 60°C. Next, the internal pressure of the apparatus was gradually decreased to finally bring the internal pressure down to 13.33$\times$10$^3$Pa (100Torr) to progress removal of air and removal of volatile components, thereby conducting removal of light fraction of ethylene heavy end tar, and removal of the diluent. Thereafter, the temperature was lowered to a room temperature, to thereby obtain a precursor of a multi-layer structured carbonaceous material comprising the nucleic material N having the ethylene heavy end tar affixed thereto and impregnated thereinto, in a powder form.

(B) Thermal treating step and powderizing step

The precursory powder of the multi-layer structured carbonaceous material was thermally treated by a batch type heating furnace. The resultant powder was introduced into a continuous type heating furnace in a state charged in a graphite vessel, and subjected to temperature elevation over a period of 3 hours up to 1,200°C under flow of nitrogen gas at 5 L/min, and then held for 1 hour. It was thereafter cooled down to a room temperature, thereby obtaining a multi-layer structured carbonaceous material having a carbonized coating phase. The multi-layer structured carbonaceous material obtained in the thermal treating step was capable of being disintegrated, lightly by hand. It was disintegrated by an impact type pulverizer to remove a coarse powder and a fine powder therefrom, thereby subsequently obtaining a multi-layer structured carbonaceous powder.

Listed in Table 1 are: a carbon residue amount (in parts by weight) of a carbonized product S of an organic substance relative to 100 parts by weight of graphitic carbon particles (nucleic material N); as well as a volume average particle size, a tap density, a BET specific surface area, Raman (R value, G value, half-value width), and an average circularity of the multi-layer structured carbonaceous powder (multi-layer structured carbonaceous material); a ratio of BET specific surface area of the multi-layer structured carbonaceous powder relative to a BET specific surface area of the nucleic material N; and a press load when the multi-layer structured carbonaceous powder was coated onto a copper foil, and then pressed to an electrode density of 1.60 g/cm$^3$. Further, shown in Table 2 is a value of ratio C (=B/A) of BET specific surface areas of an electrode-plate upon pressing it to an electrode density of 1.60 g/cm$^3$ so as to fabricate the above-described coin-type battery.

Table 1 shows a coin battery evaluation result (discharge capacity, initial irreversible capacity) in case of adoption of the multi-layer structured carbonaceous powder as a negative electrode. Further, Table 2 shows a cylindrical battery evaluation result. The battery evaluation results (discharge capacity, initial irreversible capacity) were all excellent. Moreover, the discharge capacity retention was large.

Example 2

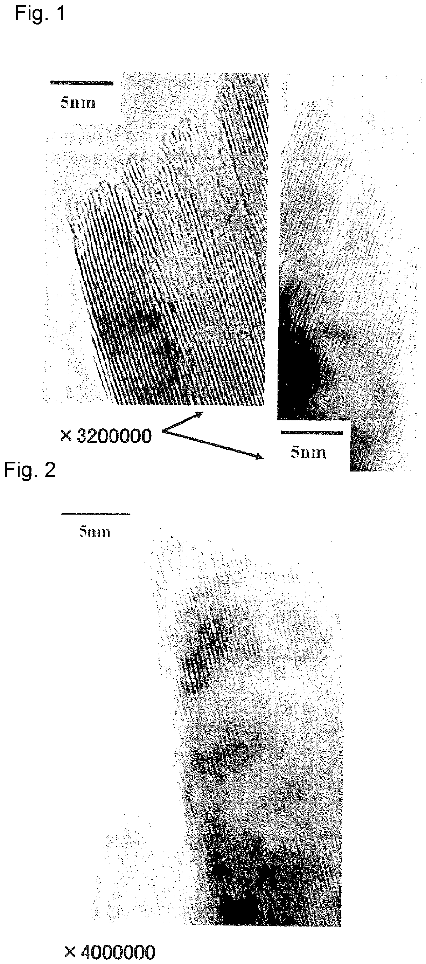

The same operation as Example 1 was conducted, except that 30 kg of spherodized natural graphite was charged. Shown in Table 1 and Table 2 are physical properties and a shape of the obtained carbonaceous material, as well as a coin battery evaluation result and a cylindrical battery evaluation result. The battery evaluation results (discharge capacity, and initial irreversible capacity) were all excellent. Further, the discharge capacity retention was large. Moreover, FIG. 2 shows a TEM photograph of the obtained carbonaceous material. It is seen that loop structures are present at an edge portion of a graphitic carbon particle, and the carbonized product of an organic compound is affixed to the surface of the particle while maintaining the loop structures.

Example 3

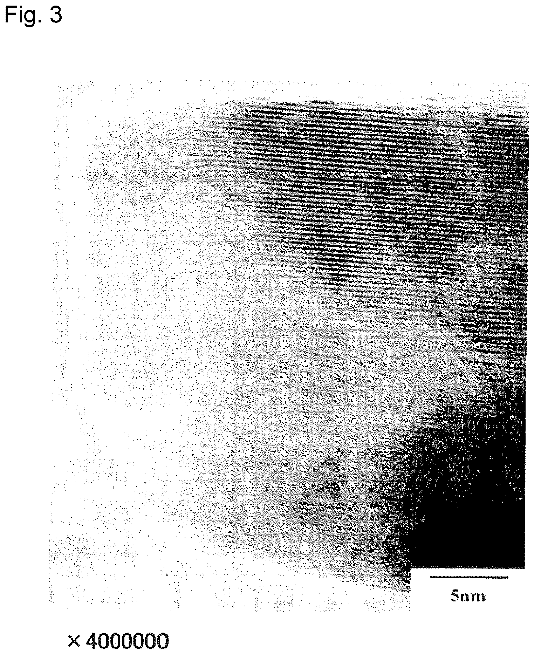

The same operation as Example 1 was conducted, except that 15 kg of spherodized natural graphite was charged. Shown in Table 1 and Table 2 are physical properties and a shape of the obtained carbonaceous material, as well as a coin battery evaluation result and a cylindrical battery evaluation result. The battery evaluation results (discharge capacity, and initial irreversible capacity) were all excellent. Further, the discharge capacity retention was large. Moreover, FIG. 3 shows a TEM photograph of the obtained carbonaceous material. It is seen that loop structures are present at an edge portion of a graphitic carbon particle, and the carbonized product of an organic compound is affixed to the surface of the particle while maintaining the loop structures.

Example 4

The same operation as Example 1 was conducted, except that 10 kg of spherodized natural graphite was charged. Shown in Table 1 and Table 2 are physical properties and a shape of the obtained carbonaceous material, as well as battery evaluation results. The battery evaluation results (discharge capacity, and initial irreversible capacity) were all excellent. Further, the discharge capacity retention was large.

Example 5

The same operation as Example 1 was conducted, except that 7.5 kg of spherodized natural graphite was charged. Shown in Table 1 and Table 2 are physical properties and a shape of the obtained carbonaceous material, as well as battery evaluation results. The battery evaluation results (discharge capacity, and initial irreversible capacity) were all excellent. Further, the discharge capacity retention was large.

Example 6

The same operation as Example 1 was conducted, except that 6 kg of spherodized natural graphite was charged. Shown in Table 1 and Table 2 are physical properties and a shape of the obtained carbonaceous material, as well as battery evaluation results. The battery evaluation results (discharge capacity, and initial irreversible capacity) were all excellent. Further, the discharge capacity retention was large.

Example 7

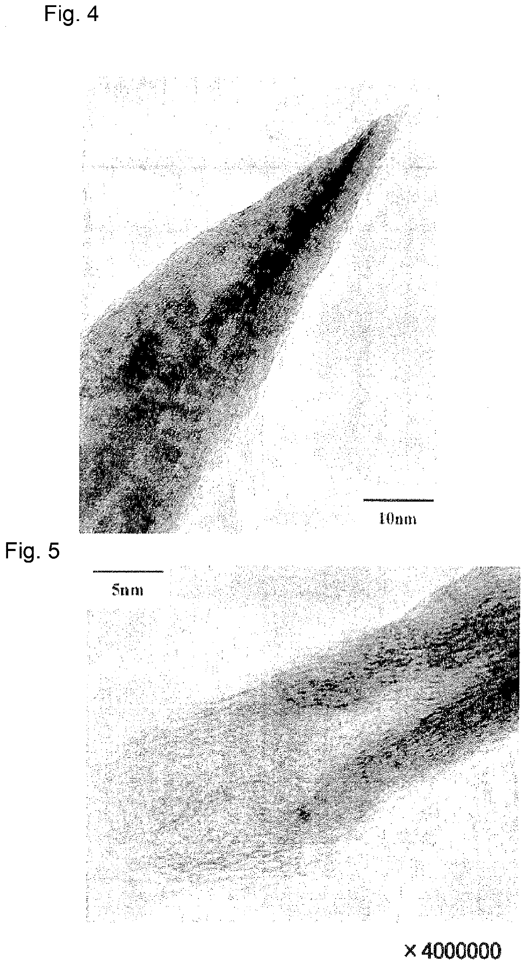

The same operation as Example 1 was conducted, except that 5 kg of spherodized natural graphite was charged. Shown in Table 1 and Table 2 are physical properties and a shape of the obtained carbonaceous material, as well as battery evaluation results. The battery evaluation results (discharge capacity, and initial irreversible capacity) were all excellent. Further, the discharge capacity retention was large. Moreover, FIG. 4 shows a TEM photograph of the obtained carbonaceous material. It is seen that loop structures are present at an edge portion of a graphitic carbon particle, and the carbonized product of an organic compound is affixed to the surface of the particle while maintaining the loop structures.

Example 8

The same operation as Example 1 was conducted, except that 3.8 kg of spherodized natural graphite was charged. Shown in Table 1 and Table 2 are physical properties and a shape of the obtained carbonaceous material, as well as battery evaluation results. The battery evaluation results (discharge capacity, and initial irreversible capacity) were all excellent. Further, the discharge capacity retention was large.

Example 9

The same operation as Example 1 was conducted, except that a heat-treated product of the nucleic material N was produced and this heat-treated product was used as the nucleic material N. Shown in Table 1 and Table 2 are physical properties and a shape of the obtained carbonaceous material, as well as battery evaluation results. The battery evaluation results (discharge capacity, and initial irreversible capacity) were all excellent. Further, the discharge capacity retention was large. Moreover, FIG. 1 shows a TEM photograph of the obtained multi-layer structured carbonaceous material. It is seen that loop structures are present at an edge portion of a graphitic carbon particle.

(A') Heat-treating step of nucleic material N

Introduced into a continuous type heating furnace, in a state charged in a graphite vessel, was a spherodized natural graphite (volume average particle size of 16.3 $\mu$m; tap density of 0.99 g/cm$^3$; BET specific surface area of 7.3 m$^2$/g; interlayer spacing (d002) of (002) plane of 0.3345 nm; crystallite size (Lc) of 1,000 nm or more; R value of 0.26; and true density of 2.26 g/cm$^3$) as graphitic carbon particles (nucleic material N); and the natural graphite was subjected to temperature elevation over a period of 3 hours up to 1,200°C under flow of nitrogen gas at 5 L/min, and then held for 1 hour. It was thereafter cooled down to a room temperature, thereby obtaining a heat-treated product (volume average particle size of 16.6 $\mu$m; tap density of 1.10 g/cm$^3$; BET specific surface area of 6.1 m$^2$/g; interlayer spacing (d002) of (002) plane of 0.3345 nm; crystallite size (Lc) of 1,000 nm or more; R value of 0.19; and true density of 2.26 g/cm$^3$) of the nucleic material N.

Example 10

The same operation as Example 3 was conducted, except that the heat-treated product of nucleic material N was used as a starting material. Shown in Table 1 and Table 2 are physical properties and a shape of the obtained carbonaceous material, as well as battery evaluation results. The battery evaluation results (discharge capacity, and initial irreversible capacity) were most excellent. Further, the discharge capacity retention was large.

Comparative Example 1

Although the spherodized natural graphite, which was the same as Example 1, was used as graphitic carbon particles (nucleic material N), a carbonized product S was not affixed thereto. Shown in Table 1 and Table 2 are physical properties and a shape of the used graphitic carbon particles (nucleic material N), as well as battery evaluation results. The irreversible capacity upon initial charge and discharge (initial irreversible capacity) was larger by nearly 10 mAh/g, as compared to the situation where the carbonized product S was affixed to the nucleic material N. Further, the discharge capacity retention was small.

Comparative Example 2

The same operation as Example 1 was conducted, except that 3 kg of spherodized natural graphite was charged. Shown in Table 1 and Table 2 are physical properties and a shape of the obtained carbonaceous material, as well as battery evaluation results. The irreversible capacity upon initial charge and discharge (initial irreversible capacity) was larger, as compared to the situation where the carbonized product S was affixed to graphitic carbon particles (nucleic material N) such that the carbon residue amount of the former was made to be between 0.1 part by weight inclusive and 4 parts by weight inclusive relative to 100 parts by weight of the latter. Further, the discharge capacity retention was small. Moreover, FIG. 5 shows a TEM photograph of the obtained carbonaceous material. It is seen that loop structures at an edge portion of a graphitic carbon particle have been broken.

Comparative Example 3

The same operation as Example 1 was conducted, except that 2 kg of spherodized natural graphite was charged. Shown in Table 1 and Table 2 are physical properties and a shape of the obtained carbonaceous material, as well as battery evaluation results. The irreversible capacity upon initial charge and discharge (initial irreversible capacity) was larger, as compared to the situation where the carbonized product S was affixed to graphitic carbon particles (nucleic material N) such that the carbon residue amount of the former was made to be between 0.1 part by weight inclusive and 4 parts by weight inclusive relative to 100 parts by weight of the latter. Further, the discharge capacity retention was small.

Comparative Example 4

The same operation as Example 1 was conducted, except that 3.8 kg of flaky natural graphite (volume average particle size of 27.1 $\mu$m; tap density of 0.55 g/cm$^3$; BET specific surface area of 4.7 m$^2$/g; and true density of 2.26 g/cm$^3$) was charged. Shown in Table 1 and Table 2 are physical properties and a shape of the obtained carbonaceous material, as well as battery evaluation results. The obtained carbonaceous material had an average circularity of 0.86. The irreversible capacity upon initial charge and discharge (initial irreversible capacity) was larger, as compared to the situation where carbonaceous material had an average circularity of 0.94 or more. Further, the discharge capacity retention was small.

Table 1

| | Graphitic carbon particle (nucleic material N) | Starting material of carbonized product S | Carbon residue amount of S (parts by weight) | Volume average particle size (μm) | Tap density (g/cm³) | BET specific surface area (m²/g) | Specific surface area of multi-layer structured carbonaceous material/Specific surface area of graphitic carbon particle | Raman | | | Average circularity | Press load (kg/Scm) @1.60g/cm³ | Electrode density (g/cm³) | Discharge capacity (mAh/g) | Initial irreversible capacity (mAh/g) |
| | | | | | | | | R value | G value | Δν (cm⁻¹) | | | | | |
|---|---|---|---|---|---|---|---|---|---|---|---|---|---|---|---|
| Example 1 | Spherodized natural graphite | Ethylene heavy end | 0.1 | 16.4 | 1.03 | 6.6 | 0.90 | 0.21 | 2.05 | 24.1 | 0.94 | 310 | 1.60 | 358 | 32 |
| Example 2 | ditto | ditto | 0.5 | 16.6 | 1.06 | 5.8 | 0.79 | 0.22 | 2.03 | 24.2 | 0.95 | 380 | 1.61 | 352 | 33 |
| Example 3 | ditto | ditto | 1.0 | 16.7 | 1.08 | 5.0 | 0.68 | 0.23 | 2.00 | 24.9 | 0.94 | 400 | 1.60 | 350 | 34 |
| Example 4 | ditto | ditto | 1.5 | 16.6 | 1.09 | 4.4 | 0.60 | 0.24 | 1.95 | 25.4 | 0.94 | 410 | 1.59 | 352 | 35 |
| Example 5 | ditto | ditto | 2.0 | 16.7 | 1.11 | 4.0 | 0.55 | 0.24 | 1.84 | 26.1 | 0.95 | 430 | 1.60 | 352 | 36 |
| Example 6 | ditto | ditto | 2.5 | 16.6 | 1.12 | 3.7 | 0.51 | 0.25 | 1.66 | 27.4 | 0.96 | 450 | 1.58 | 354 | 37 |
| Example 7 | ditto | ditto | 3.0 | 16.8 | 1.13 | 3.3 | 0.45 | 0.27 | 1.52 | 29.3 | 0.96 | 470 | 1.62 | 353 | 38 |
| Example 8 | ditto | ditto | 4.0 | 16.7 | 1.13 | 3.2 | 0.44 | 0.32 | 1.43 | 30.6 | 0.96 | 520 | 1.61 | 354 | 39 |
| Example 9 | Heat-treated spherodized natural graphite | ditto | 0.0 | 16.6 | 1.10 | 6.1 | 1.00 | 0.19 | 2.07 | 24.1 | 0.93 | 260 | 1.62 | 357 | 40 |
| Example 10 | ditto | ditto | 1.0 | 16.8 | 1.12 | 5.1 | 0.70 | 0.22 | 2.01 | 25.0 | 0.94 | 390 | 1.63 | 352 | 31 |
| | | | | | | | | | | | | | | | |
| Comparative Example 1 | Spherodized natural graphite | - | 0.0 | 16.3 | 0.99 | 7.3 | 1.00 | 0.29 | 2.09 | 24.0 | 0.93 | 250 | 1.60 | 363 | 47 |

| | Graphitic carbon particle (nucleic material N) | Starting material of carbonized product S | Carbon residue amount of S (parts by weight) | Volume average particle size (μm) | Tap density (g/cm³) | BET specific surface area (m²/g) | Specific surface area of multi-layer structured carbonaceous material/Specific surface area of graphitic carbon particle | Raman | | | Average circularity | Press load (kg/Scm) @1.60g/cm³ | Electrode density (g/cm³) | Discharge capacity (mAh/g) | Initial irreversible capacity (mAh/g) |
| | | | | | | | | R value | G value | Δν (cm⁻¹) | | | | | |
| Comparative Example 2 | ditto | Ethylene heavy end | 5.0 | 17.0 | 1.13 | 2.6 | 0.35 | 0.35 | 1.31 | 31.1 | 0.95 | 570 | 1.62 | 353 | 40 |
| Comparative Example 3 | ditto | ditto | 7.5 | 17.3 | 1.15 | 2.4 | 0.33 | 0.38 | 1.27 | 34.7 | 0.95 | 700 | 1.58 | 352 | 43 |
| Comparative Example 4 | Flaky natural graphite | ditto | 4.0 | 26.3 | 0.83 | 2.2 | 0.47 | 0.33 | 1.41 | 29.8 | 0.86 | 610 | 1.61 | 352 | 41 |

Table 2

| | Graphitic carbon particle (nucleic material N) | Starting material of carbonized product S | Carbon residue amount of S (parts by weight) | Electrode density (g/cm$^3$) @1.75g/cm$^3$ | BET specific surface area (m$^2$/g) of electrode-plate | | | Cylindrical battery evaluation result | |
|---|---|---|---|---|---|---|---|---|---|
| | | | | | BET specific surface area of electrode-plate before pressing | BET specific surface area of electrode-plate after pressing @1.60g/cm$^3$ | C=B/A | Discharge capacity retention ($) at 50 cycles | Discharge capacity retention ($) at 100 cycles |
| Example 1 | Spherodized natural graphite | Ethylene heavy end | 0.1 | 1.72 | 4.9 | 5.0 | 1.02 | | |
| Example 2 | ditto | ditto | 0.5 | 1.72 | 4.3 | 4.4 | 1.02 | | |
| Example 3 | ditto | ditto | 1.0 | 1.73 | 3.5 | 3.6 | 1.03 | 93.2 | 89.2 |
| Example 4 | ditto | ditto | 1.5 | 1.74 | 3.0 | 3.2 | 1.07 | | |
| Example 5 | ditto | ditto | 2.0 | 1.73 | 2.4 | 2.6 | 1.08 | | |
| Example 6 | ditto | ditto | 2.5 | 1.75 | 2.2 | 2.4 | 1.10 | | |
| Example 7 | ditto | ditto | 3.0 | 1.73 | 1.9 | 2.2 | 1.13 | | |
| Example 8 | ditto | ditto | 4.0 | 1.74 | 1.5 | 1.8 | 1.17 | | |
| Example 9 | Heat-treated spherodized natural graphite | ditto | 0.0 | 1.71 | 5.5 | 5.4 | 0.98 | | |
| Example 10 | ditto | ditto | 1.0 | 1.73 | 3.6 | 3.7 | 1.03 | | |
| | | | | | | | | | |
| Comparative Example 1 | Spherodized natural graphite | - | 0.0 | 1.73 | 5.9 | 6.0 | 1.02 | | |
| Comparative Example 2 | ditto | Ethylene heavy end | 5.0 | 1.72 | 1.6 | 2.4 | 1.50 | 84.6 | 79.7 |
| Comparative Example 3 | ditto | ditto | 7.5 | 1.73 | 1.0 | 1.7 | 1.68 | | |
| Comparative Example 4 | Flaky natural graphite | ditto | 4.0 | | | | | | |

INDUSTRIAL APPLICABILITY

The nonaqueous secondary battery adopting the multi-layer structured carbonaceous material of the present invention as a negative electrode material, has a higher capacity, is low in irreversible capacity upon initial charge and discharge, and has excellent cycle characteristics, so that the nonaqueous secondary battery is widely usable in fields of electronic equipment, and the like.

**Claims**

1.  A multi-layer structured carbonaceous material comprising graphitic carbon particles having carbonized products of an organic compound affixed to surfaces of the particles, **characterised in that** loop structures are present at an edge portion of each of the graphitic carbon particles, and wherein the edge portions of the graphitic carbon particles are edge portions of c-axis plane layers of the graphitic carbon particles, respectively.

2.  The multi-layer structured carbonaceous material according to claim 1, wherein the multi-layer structured carbonaceous material satisfies all the following requirements:

    (b) the volume average particle size is 2 to 70 $\mu$m;
    (c) the tap density is 0.80 g/cm$^3$ or more;
    (d) the average circularity is 0.94 or more; and
    (e) the R value, which is a ratio of a scattering intensity at 1,360 cm$^{-1}$ to a scattering intensity at 1,580 cm$^{-1}$ in an argon ion laser Raman spectrum adopting argon ion laser beam at a wavelength of 514.5 nm, is 0.15 or more.

3.  The multi-layer structured carbonaceous material according to claim 2, wherein the multi-layer structured carbonaceous material further satisfies the following requirement (f):
    (f) when the multi-layer structured carbonaceous material is used and prepared into a slurry, the slurry is then coated onto a current collector and dried to fabricate an electrode, and the electrode is thereafter roll-pressed at a press load (linear pressure) between 200 kg/5 cm inclusive and 550 kg/5 cm inclusive in a manner to achieve an electrode density of 1.60 g/cm$^3$ to thereby prepare the electrode; the ratio of the electrode specific surface area after pressing relative to the electrode specific surface area before pressing is between 0.90 inclusive and 1.2 inclusive.

4.  The multi-layer structured carbonaceous material according to claim 2, wherein the multi-layer structured carbonaceous material further satisfies the following requirement (a):

    (a) the graphitic carbon particles have been spherodized, and the multi-layer structured carbonaceous material comprises multi-layer structured carbonaceous particles, wherein the multi-layer structured carbonaceous particles each comprise the spherodized graphitic carbon particle having a carbonized product of the organic compound affixed thereto in a carbon residue amount of the carbonized product between 0.1 part by weight inclusive and 4 parts by weight inclusive relative to 100 parts by weight of the spherodized graphitic carbon particle.

5.  The multi-layer structured carbonaceous material according to any one of claims 2 to 4, wherein the multi-layer structured carbonaceous material has a specific surface area of 10 m$^2$/g or less as measured by a BET method, and the ratio of the specific surface area relative to a BET specific surface area of the graphitic carbon particles is between 0.40 inclusive and 1.00 inclusive.

6.  The multi-layer structured carbonaceous material according to any one of claims 2 to 4, wherein the multi-layer structured carbonaceous material has a G value=Yb/Ya, which is a ratio of an integral value Yb of a spectral intensity within a wavelength range near 1580±100 cm$^{-1}$ relative to an integral value Ya of a spectral intensity within a wavelength range near 1,360±100 cm$^{-1}$ in an argon ion laser Raman spectrum adopting argon ion laser beam at a wavelength of 514.5 nm, and which G value is smaller than a G value of the graphitic carbon particles and is 3.0 or less.

7.  A production method of the multi-layer structured carbonaceous material according to any one of claims 1 to 6, comprising the steps of:

    mixing the graphitic carbon particles with the organic compound or with a solution of the organic compound; and

thereafter thermally treating the mixture, to obtain the multi-layer structured carbonaceous material; wherein the graphitic carbon particles as a starting material comprise spherodized highly crystalline graphite, and satisfy all the following requirements (1a) to (1f):

(1a) the volume average particle size is 5 to 50 $\mu$m;

(1b) the tap density is 0.70 g/cm$^3$ or more;

(1c) the specific surface area as measured by a BET method is less than 18 m$^2$/g;

(1d) the interlayer spacing (d002) of (002) plane of the graphitic carbon particles as measured by a wide angle X-ray diffractometry is 0.345 nm or less, and the crystallite size (Lc) is 90 nm or more;

(1e) the R value, which is a ratio of a scattering intensity at 1,360 cm$^{-1}$ to a scattering intensity at 1,580 cm$^{-1}$ in an argon ion laser spectrum adopting argon ion laser beam at a wavelength of 514.5 nm, is 0.10 or more; and

(1f) the true density is 2.21 g/cm$^3$ or more, wherein, in the step of mixing the graphitic carbon particles with the organic compound, the kinematic viscosity of the organic compound or the solution of the organic compound at 50°C is adjusted to 25 to 75 mm$^2$/s (cSt),

wherein the mixing amount of the organic compound is between 0.1 part by weight inclusive and 4 parts by weight inclusive relative to 100 parts by weight of the graphitic carbon particles, as determined by a carbon residue amount according to the method described in the description, and

wherein the mixture is thermally treated at 600°C or higher.

8. The production method of the multi-layer structured carbonaceous material according to claim 7, wherein the mixture of the graphitic carbon particles and the organic compound contains a solvent therein, wherein the solvent contains an aromatic hydrocarbon-based organic solvent and/or a heterocyclic organic solvent.

9. The production method of the multi-layer structured carbonaceous material according to claim 7 or 8, wherein the organic compound is a heavy oil.

10. The production method of the multi-layer structured carbonaceous material according to any one of claims 7 to 9, wherein, in the step of thermally treating the mixture, the mixture containing a volatile component is thermally treated in a continuous type heating furnace, thereby affixing a carbonized product of the organic compound, which carbonized product contains substantially no volatile components, onto surfaces of the graphitic carbon particles.

11. The production method of the multi-layer structured carbonaceous material according to any one of claims 7 to 10, wherein the graphitic carbon particles are heat-treated graphitic carbon particles.

12. A nonaqueous secondary battery-oriented negative electrode adopting the multi-layer structured carbonaceous material as a negative electrode material according to any one of claims 1 to 6.

13. A nonaqueous secondary battery comprising: a negative electrode containing a carbonaceous material capable of intercalating therein and deintercalating therefrom lithium; a positive electrode; and a solute and a nonaqueous solvent; wherein the negative electrode is the nonaqueous secondary battery-oriented negative electrode according to claim 12.

**Patentansprüche**

1. Kohlenstoffhaltiges Material mit Mehrschichtstruktur, umfassend graphitische Kohlenstoffpartikel mit karbonisierten Produkten einer organischen Verbindung, die auf Oberflächen der Partikel aufgebracht sind, **dadurch gekennzeichnet, dass**
Schleifenstrukturen an einem Randabschnitt von jedem der graphitischen Kohlenstoffpartikel vorhanden sind und wobei die Randabschnitte der graphitischen Kohlenstoffpartikel jeweils Randabschnitte aus Schichten der c-Achsenebene der graphitischen Kohlenstoffpartikel sind.

2. Kohlenstoffhaltiges Material mit Mehrschichtstruktur gemäß Anspruch 1, wobei das kohlenstoffhaltige Material mit Mehrschichtstruktur alle nachfolgenden Erfordernisse erfüllt:

(b) die volumengemittelte Partikelgröße beträgt 2 bis 70 $\mu$m,

(c) die Klopfdichte beträgt 0,80 g/cm$^2$ oder mehr,

(d) die durchschnittliche Kreisförmigkeit beträgt 0,94 oder mehr und

(e) der R-Wert, der ein Verhältnis einer Streuintensität bei 1.350 cm$^{-1}$ zu einer Streuintensität bei 1.580 cm$^{-1}$ in einem Argonionenlaser-Ramanspektrum unter Anwendung eines Argonionenlaserstrahls bei einer Wellenlänge von 514,5 nm ist, beträgt 0,15 oder mehr.

3. Kohlenstoffhaltiges Material mit Mehrschichtstruktur gemäß Anspruch 2, wobei das kohlenstoffhaltige Material mit Mehrschichtstruktur ferner das folgende Erfordernis (f) erfüllt:

(f) wenn das kohlenstoffhaltige Material mit Mehrschichtstruktur verwendet wird und zu einer Aufschlämmung zubereitet wird, die Aufschlämmung dann auf einen Stromkollektor beschichtet und getrocknet wird, um eine Elektrode herzustellen, und die Elektrode danach bei einer Pressbelastung (linearer Druck) zwischen 200 kg/5 cm einschließlich und 550 kg/5 cm einschließlich so mit einer Walze gepresst wird, dass eine Elektrodendichte von 1,60 g/cm$^3$ erhalten wird, um dadurch die Elektrode herzustellen, beträgt das Verhältnis der spezifischen Oberfläche der Elektrode nach dem Pressen relativ zu der spezifischen Oberfläche der Elektrode vor dem Pressen zwischen 0,90 einschließlich und 1,2 einschließlich.

4. Kohlenstoffhaltiges Material mit Mehrschichtstruktur gemäß Anspruch 2, wobei das kohlenstoffhaltige Material mit Mehrschichtstruktur ferner das folgende Erfordernis (a) erfüllt:

(a) die graphitischen Kohlenstoffpartikel wurden sphäroidisiert und das kohlenstoffhaltige Material mit Mehrschichtstruktur umfasst kohlenstoffhaltige Partikel mit Mehrschichtstruktur, wobei die kohlenstoffhaltigen Partikel mit Mehrschichtstruktur jeweils das sphäroidisierte graphitische Partikel mit einem darauf aufgebrachten karbonisierten Produkt von der organischen Verbindung in einer Kohlenstoffrestmenge des karbonisierten Produkts zwischen 0,1 Gewichtsteilen einschließlich und 4 Gewichtsteilen einschließlich relativ zu 100 Gewichtsteilen des sphäroidisierten graphitischen Kohlenstoffpartikels umfassen.

5. Kohlenstoffhaltiges Material mit Mehrschichtstruktur gemäß einem der Ansprüche 2 bis 4, wobei das kohlenstoffhaltige Material mit Mehrschichtstruktur eine spezifische Oberfläche von 10 m$^2$/g oder weniger, gemessen durch ein BET-Verfahren, aufweist und das Verhältnis der spezifischen Oberfläche relativ zu einer spezifischen BET-Oberfläche der graphitischen Kohlenstoffpartikel zwischen 0,40 einschließlich und 1,0 einschließlich beträgt.

6. Kohlenstoffhaltiges Material mit Mehrschichtstruktur gemäß einem der Ansprüche 2 bis 4, wobei das kohlenstoffhaltige Material mit Mehrschichtstruktur einen G-Wert=Yb/Ya aufweist, der ein Verhältnis eines Integralwerts Yb einer Spektralintensität innerhalb eines Wellenlängenbereichs in der Nähe von 1.580±100 cm$^{-1}$ relativ zu einem Integralwert Ya einer Spektralintensität innerhalb eines Wellenlängenbereichs in der Nähe von 1.360±100 cm$^{-1}$ in einem Argonionenlaser-Ramanspektrum unter Anwendung eines Argonionenlaserstrahls bei einer Wellenlänge von 514,5 nm ist und wobei der G-Wert kleiner als ein G-Wert der graphitischen Kohlenstoffpartikel ist und 3,0 oder weniger beträgt.

7. Herstellungsverfahren für ein kohlenstoffhaltiges Material mit Mehrschichtstruktur gemäß einem der Ansprüche 1 bis 6, umfassend die folgenden Schritte:

Mischen der graphitischen Kohlenstoffpartikel mit der organischen Verbindung oder mit einer Lösung von der organischen Verbindung und

danach thermisches Behandeln der Mischung, um ein kohlenstoffhaltiges Material mit Mehrschichtstruktur zu erhalten,

wobei die graphitischen Kohlenstoffpartikel als Ausgangsmaterial sphäroidisiertes hochkristallines Graphit umfassen und alle nachfolgenden Erfordernisse (1a) bis (1f) erfüllen:

(1a) die volumengemittelte Partikelgröße beträgt 5 bis 50 μm,

(1b) die Klopfdichte beträgt 0,70 g/cm$^3$ oder mehr,

(1c) die spezifische Oberfläche, gemessen durch ein BET-Verfahren, beträgt weniger als 18 m$^2$/g,

(1d) der Zwischenschichtabstand (d002) der (002)-Ebene der graphitischen Kohlenstoffpartikel, gemessen durch Weitwinkel-Röntgendiffraktometrie, beträgt 0,345 nm oder weniger und die Kristallitgröße (Lc) beträgt 90 nm oder mehr,

(1e) der R-Wert, der ein Verhältnis einer Streuintensität bei 1.360 cm$^{-1}$ zu einer Streuintensität bei 1.580 cm$^{-1}$ in einem Argonionenlaserspektrum unter Anwendung eines Argonionenlaserstrahls bei einer Wellenlänge von 514,5 nm ist, beträgt 0,10 oder mehr und

(1f) die Reindichte beträgt 2,21 g/cm$^3$ oder mehr,

wobei im Schritt zum Mischen der graphitischen Kohlenstoffpartikel mit der organischen Verbindung die kinematische Viskosität der organischen Verbindung oder der Lösung von der organischen Verbindung bei 50°C auf 25 bis 75 mm$^2$/s (cSt) eingestellt ist,
wobei die Beimengungsmenge der organischen Verbindung zwischen 0,1 Gewichtsteilen einschließlich und 4 Gewichtsteilen einschließlich relativ zu 100 Gewichtsteilen der graphitischen Kohlenstoffpartikel, bestimmt durch eine Kohlenstoffrestmenge gemäß dem in der Beschreibung beschriebenen Verfahren, beträgt und
wobei die Mischung bei 600°C oder höher wärmebehandelt wird.

8. Herstellungsverfahren für das kohlenstoffhaltige Material mit Mehrschichtstruktur gemäß Anspruch 7, wobei die Mischung aus den graphitischen Kohlenstoffpartikeln und der organischen Verbindung ein Lösungsmittel darin enthält, wobei das Lösungsmittel ein aromatisches kohlenwasserstoffbasiertes organisches Lösungsmittel und/oder ein heterocyclisches organisches Lösungsmittel ist.

9. Herstellungsverfahren für das kohlenstoffhaltige Material mit Mehrschichtstruktur gemäß Anspruch 7 oder 8, wobei die organische Verbindung ein Schweröl ist.

10. Herstellungsverfahren für das kohlenstoffhaltige Material mit Mehrschichtstruktur gemäß einem der Ansprüche 7 bis 9, wobei im Schritt zum Wärmebehandeln der Mischung die Mischung, die eine flüchtige Komponente enthält, in einem Durchlaufofen wärmebehandelt wird, wodurch ein karbonisiertes Produkt von der organischen Verbindung auf Oberflächen der graphitischen Kohlenstoffpartikel aufgebracht wird, wobei das karbonisierte Produkt im Wesentlichen keine flüchtigen Komponenten enthält.

11. Herstellungsverfahren für das kohlenstoffhaltige Material mit Mehrschichtstruktur gemäß einem der Ansprüche 7 bis 10, wobei die graphitischen Kohlenstoffpartikel wärmebehandelte graphitische Kohlenstoffpartikel sind.

12. Für eine nichtwässrige Sekundärbatterie ausgerichtete negative Elektrode, die das kohlenstoffhaltige Material mit Mehrschichtstruktur gemäß einem der Ansprüche 1 bis 6 als negatives Elektrodenmaterial anwendet.

13. Nichtwässrige Sekundärbatterie, umfassend: eine negative Elektrode, die ein kohlenstoffhaltiges Material enthält, das in der Lage ist, Lithium zu interkalieren und zu deinterkalieren, eine positive Elektrode, und einen gelösten Stoff und ein nichtwässriges Lösungsmittel, wobei die negative Elektrode die für eine nichtwässrige Sekundärbatterie ausgerichtete negative Elektrode gemäß Anspruch 12 ist.

**Revendications**

1. Matériau carboné structuré multicouche comprenant des particules de carbone graphitique présentant des produits carbonisés d'un composé organique fixés à des surfaces des particules, **caractérisé en ce que** des structures en boucle sont présentes au niveau d'une partie de bord de chacune des particules de carbone graphitique, et dans lequel les parties de bord des particules de carbone graphitique sont des parties de bord de couches planes d'axe c des particules de carbone graphitique, respectivement.

2. Matériau carboné structuré multicouche selon la revendication 1, dans lequel le matériau carboné structuré multicouche satisfait toutes les exigences suivantes :

(b) la moyenne volumique du diamètre de particules est de 2 à 70 µm ;
(c) la masse volumique après tassement est de 0,80 g/cm$^3$ ou plus ;
(d) la circularité moyenne est de 0,94 ou plus ; et
(e) la valeur R, qui est un rapport d'une intensité de diffusion à 1360 cm$^{-1}$ à une intensité de diffusion à 1580 cm$^{-1}$ dans un spectre Raman de laser à argon ionisé adoptant un faisceau laser à argon ionisé à une longueur d'onde de 514,5 nm, est de 0,15 ou plus.

3. Matériau carboné structuré multicouche selon la revendication 2, dans lequel le matériau carboné structuré multicouche satisfait en outre l'exigence (f) suivante :
(f) quand le matériau carboné structuré multicouche est utilisé et préparé sous la forme d'une suspension, la suspension est ensuite enduite sur un collecteur de courant et séchée pour fabriquer une électrode, et l'électrode est ensuite pressée au rouleau à une charge de presse (pression linéaire) entre 200 kg/5 cm inclus et 550 kg/5 cm inclus de manière à obtenir une masse volumique d'électrode de 1,60 g/cm$^3$ pour ainsi préparer l'électrode ; le rapport de la surface spécifique d'électrode après pressage par rapport à la surface spécifique d'électrode avant pressage est entre 0,90 inclus et 1,2 inclus.

4. Matériau carboné structuré multicouche selon la revendication 2, dans lequel le matériau carboné structuré multicouche satisfait en outre l'exigence (a) suivante :

   (a) les particules de carbone graphitique ont été sphérodisées, et le matériau carboné structuré multicouche comprend des particules carbonées structurées multicouches, dans lequel les particules carbonées structurées multicouches comprennent chacune la particule de carbone graphitique sphérodisée présentant un produit carbonisé du composé organique y étant fixé en une quantité résiduelle de carbone du produit carbonisé entre 0,1 partie en poids inclus et 4 parties en poids inclus par rapport à 100 parties en poids de la particule de carbone graphitique sphérodisée.

5. Matériau carboné structuré multicouche selon l'une quelconque des revendications 2 à 4, dans lequel le matériau carboné structuré multicouche présente une surface spécifique de 10 m$^2$/g ou moins telle que mesurée par un procédé BET, et le rapport de la surface spécifique par rapport à une surface spécifique BET des particules de carbone graphitique est entre 0,40 inclus et 1,00 inclus.

6. Matériau carboné structuré multicouche selon l'une quelconque des revendications 2 à 4, dans lequel le matériau carboné structuré multicouche présente une valeur G = Yb/Ya, qui est un rapport d'une valeur intégrale Yb d'une intensité spectrale au sein d'une plage de longueurs d'onde proche de 1580 $\pm$ 100 cm$^{-1}$ par rapport à une valeur intégrale Ya d'une intensité spectrale au sein d'une plage de longueurs d'onde proche de 1360 $\pm$ 100 cm$^{-1}$ dans un spectre Raman de laser à argon ionisé adoptant un faisceau laser à argon ionisé à une longueur d'onde de 514,5 nm, et dont la valeur G est inférieure à une valeur G des particules de carbone graphitique et est de 3,0 ou moins.

7. Procédé de production du matériau carboné structuré multicouche selon l'une quelconque des revendications 1 à 6, comprenant les étapes suivantes :

   le mélange des particules de carbone graphitique avec le composé organique ou avec une solution du composé organique ; et
   par la suite, le traitement thermique du mélange, pour obtenir le matériau carboné structuré multicouche ;
   dans lequel les particules de carbone graphitique en tant que matériau de départ comprennent un graphite sphérodisé hautement cristallin, et satisfont toutes les exigences (1a) à (1f) suivantes :

   (1a) la moyenne volumique du diamètre de particules est de 5 à 50 $\mu$m ;
   (1b) la masse volumique après tassement est de 0,70 g/cm$^3$ ou plus ;
   (1c) la surface spécifique telle que mesurée par un procédé BET est inférieure à 18 m$^2$/g ;
   (1d) l'espacement intercouche (d002) du plan (002) des particules de carbone graphitique tel que mesuré par une diffractométrie à rayons X grand angle est de 0,345 nm ou moins, et la taille de cristallite (Lc) est de 90 nm ou plus ;
   (1e) la valeur R, qui est un rapport d'une intensité de diffusion à 1360 cm$^{-1}$ à une intensité de diffusion à 1580 cm$^{-1}$ dans un spectre de laser à argon ionisé adoptant un faisceau laser à argon ionisé à une longueur d'onde de 514,5 nm, est de 0,10 ou plus ; et
   (1f) la masse volumique réelle est de 2,21 g/cm$^3$ ou plus, dans lequel, dans l'étape de mélange des particules de carbone graphitique avec le composé organique, la viscosité cinématique du composé organique ou de la solution du composé organique à 50 °C est ajustée de 25 à 75 mm$^2$/s (cSt),

   dans lequel la quantité de mélange du composé organique est entre 0,1 partie en poids inclus et 4 parties en poids inclus par rapport à 100 parties en poids des particules de carbone graphitique, telle que déterminée par une quantité résiduelle de carbone selon le procédé décrit dans la description, et
   dans lequel le mélange est traité thermiquement à 600°C ou plus.

8. Procédé de production du matériau carboné structuré multicouche selon la revendication 7, dans lequel le mélange des particules de carbone graphitique et du composé organique contient un solvant, dans lequel le solvant contient un solvant organique à base d'hydrocarbure aromatique et/ou un solvant organique hétérocyclique.

9. Procédé de production du matériau carboné structuré multicouche selon la revendication 7 ou 8, dans lequel le composé organique est une huile lourde.

10. Procédé de production du matériau carboné structuré multicouche selon l'une quelconque des revendications 7 à 9, dans lequel, dans l'étape de traitement thermique du mélange, le mélange contenant un composant volatil est traité thermiquement dans un four de chauffage de type continu, pour ainsi fixer un produit carbonisé du composé organique, lequel produit carbonisé ne contenant sensiblement pas de composants volatils, sur les surfaces des particules de carbone graphitique.

11. Procédé de production du matériau carboné structuré multicouche selon l'une quelconque des revendications 7 à 10, dans lequel les particules de carbone graphitique sont des particules de carbone graphitique traitées thermiquement.

12. Électrode négative orientée batterie secondaire non aqueuse adoptant le matériau carboné structuré multicouche en tant que matériau d'électrode négative selon l'une quelconque des revendications 1 à 6.

13. Batterie secondaire non aqueuse comprenant : une électrode négative contenant un matériau carboné dans lequel du lithium peut s'intercaler et duquel du lithium peut se désintercaler ; une électrode positive; et un soluté et un solvant non aqueux ; dans laquelle l'électrode négative est l'électrode négative orientée batterie secondaire non aqueuse selon la revendication 12.

Fig. 1

× 3200000

Fig. 2

× 4000000

Fig. 3

5nm

× 4000000

Fig. 4

10nm

Fig. 5

5nm

× 4000000

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4171677 A
- JP 4370662 A
- WO 2007099877 A1
- JP 2000340232 A

**Non-patent literature cited in the description**

- **ISAO MOCHIDA.** Chemistry and industry of carbon material. Asakura Publishing Co., Ltd